# EUROPEAN PATENT APPLICATION

(11) **EP 4 574 663 A1**
(43) Date of publication of application: **25.06.2025**
(21) Application number: 24216787.2
(22) Date of filing: 02.12.2024
(51) Int. Cl.: B64D 27/355, B64D 33/04, B64D 37/30, B64D 41/00

(54) **ENERGY CONVERSION ARRANGEMENT, ENERGY SYSTEM AND AIRCRAFT COMPRISING SAME**

(30) Priority: 21.12.2023 EP 23290048; 21.12.2023 EP 23290049; 21.12.2023 EP 23290052; 21.12.2023 EP 23290050; 21.12.2023 EP 23290051; 07.08.2024 DE 102024122551
(71) Applicant: AIRBUS Operations GmbH, 21129 Hamburg (DE); Airbus (S.A.S.), 31700 Blagnac (FR)
(72) Inventor: BAMMER, Benedikt, 31700 Blagnac (FR); WITTMANN, Tim, 21129 Hamburg (DE); GRODAU, Rainer, 31700 Blagnac (FR)
(74) Representative: LKGLOBAL Lorenz & Kopf Patentanwalt Attorney at Law PartG mbB

(57) **Abstract**

An energy conversion arrangement (10) for an aircraft (1), an energy system (2) and an aircraft (1) comprising an energy conversion arrangement (10) and/or an energy system (2) are provided, wherein the energy conversion arrangement (10) comprises a fuel conversion device (11), in particular a fuel cell system (70), for converting at least one fuel to electrical and/or mechanical energy, and at least one an exhaust outlet (13) for letting out exhausts (E) produced in the fuel conversion device (11) by the fuel conversion; and at least one mixing assembly (42) configured to admix further exhausts (G) of the fuel conversion device (11) to the exhausts (E) from the at least one exhaust outlet (13).

## Description

### Technical Field

The present disclosure relates to the field of anthropogenic climate change due to cloudiness caused by contrails produced by energy systems of aircrafts. In particular, the disclosure relates to an energy conversion arrangement for an aircraft, an energy system, in particular for powering a propulsion unit for propelling an aircraft, and to an aircraft comprising an energy conversion arrangement and/or an energy system.

### Technical Background

Conventional aircraft engines emit water vapor and soot particles. The plume of the conventional engine mixes with ambient air and the temperature decreases. This leads to a water vapor supersaturation and subsequent droplet formation on the soot particles. These droplets freeze and hence form contrails. In ice-supersaturated regions (ISSR), contrails persist for a long time and contribute to global warming.

For several reasons, hydrogen powered fuel cell aircraft are an interesting alternative to conventional aircraft propulsion and also for power generation, in that they may replace conventional auxiliary power units (APUs). In particular, they emit no carbon dioxide and thus are seen as a potential pathway to a more sustainable aviation. However, they emit large amounts of water. If this water is able to form persistent contrails, it contributes to global warming.

Fuel cells emit no soot particles. Due to the low concentration of ambient aerosols, only a few droplets can form through heterogeneous nucleation. Instead, most droplets form through homogeneous nucleation during which molecules condensate and form nuclei without the presence of foreign ions or particles. Homogeneous nucleation can occur inside the fuel cell system, e.g., in a turbine or a nozzle, or in the plume during mixing and cooling with ambient air. The occurrence and place of homogeneous nucleation depends on the system architecture, operating conditions and ambient conditions. Homogeneous nucleation leads to a high concentration of small droplet radii, often below one micron. If the droplets freeze to persistent ice crystals, the resulting contrail might have a stronger climate impact than a contrail of a conventional aircraft engine. Therefore, it is important to reduce the contrail formation of fuel cell aircraft as much as possible or avoid it altogether.

EP 3 961 012 A1, for example, relates to an aircraft flight contrail assessment device comprising a contrail sensor adapted to produce contrails data representative of an atmosphere parameter having an influence on the formation of contrails or an observation parameter varying depending on at least the presence of one or more contrails, and a processing unit adapted to calculate at least a contrails value representative of an amount of contrail, based on said contrails data. The invention provides such device as well a corresponding method to evaluate the amount of contrails produced by an aircraft during a flight.

US 11 579 050 B2 relates to a system, configured for being on board an aircraft. The system includes a probe for collecting samples of contrail, a chamber for collecting the samples, a collecting conduit for conducting the samples from the collecting probe the collecting chamber and at least one device for measuring at least one parameter characterizing the samples in the collecting conduit while they are conducted from the collecting probe to the collecting chamber. By virtue of the system, it is not necessary to use a second aircraft that follows the aircraft for collecting samples of contrail.

US 5 005 355 A describes a method of suppressing the formation of contrails from the exhaust of an engine operating in cold temperatures including the steps of providing a combined nucleating agent and freeze-point depressant selected from the group of water soluble monohydric, dihydric, trihydric or other polyhydric alcohols, or mixtures thereof, forming the solution into a vapor, and injecting the solution into the exhaust of the engine. The solution may include a non-corrosive surfactant. Another solution may include an organic or an inorganic nucleating agent, or mixtures thereof, in monohydric, dihydric, or polyhydric alcohols, or mixtures thereof, and in addition may contain one or more surfactants.

EP 2 150 692 A2 describes an aircraft comprising a gas turbine engine that exhausts a plume of gases in use, the aircraft comprises an ultrasound generator having an ultrasonic actuator and a waveguide to direct ultrasonic waves at the exhaust plume to avoid the formation of contrails.

EP 2 153 043 A2 describes a method of operating an aircraft, and the aircraft itself, comprising a gas turbine engine that exhausts a plume of gases in use, the aircraft is characterised by comprising an electromagnetic radiation generator and a waveguide to direct electromagnetic radiation at the exhaust plume to avoid the formation of contrails.

US 7 971 438 B2 deals with the provision of a condensation stage in a heat exchanger arrangement for a gas turbine engine, wherein the level of condensation within a final exhaust gas flow from an engine is reduced. Furthermore, by cooling of the exhaust gas flows for mixing with by-pass air flows a water partial pressure at an exhaust gas exit temperature can be provided which is below the eutectic liquid to vapor phase transition and therefore avoid condensation (contrail) formation.

H. Cruz Champion, S. Kabelac, "Multifunctional fuel cell system for civil aircraft: Study of the cathode exhaust gas dehumidification", International Journal of Hydrogen Energy, Volume 42, Issue 49, 2017, Pages 29518-29531, ISSN 0360-3199, (https://doi.org/10.1016/j.ijhydene.2017.09.175) describe a cathode exhaust gas dehumidification system based on an air cycle machine (compressor, heat exchanger, cyclone, turbine) which supplies liquid water and dry oxygen depleted air (ODA).

Systems and methods for reducing contrails, as known from the prior art, do not satisfy all requirements for contrail reduction on aircrafts. The known systems require additional installation, space, weight, and power offtake. Moreover, the known systems cannot necessarily be applied to alternative fuel conversion technologies, such as fuel cells.

### Summary

It may thus be seen as an object to reduce climate impacts of aviation operations due to contrail formation. In other words, it can be seen as an object, to provide a contrail reduction or at least negative effects of contrails, preferably also for any contrails produced by alternative fuel conversion technologies, such as fuel cells. These objects are at least partly achieved by the subject-matter of the independent claims.

In particular, an energy conversion arrangement for an aircraft is provided, comprising a fuel conversion device, in particular a fuel cell system, for converting at least one fuel to electrical and/or mechanical energy, at least one exhaust outlet for letting out exhausts produced in the fuel conversion device by the fuel conversion; and at least one mixing assembly configured to admix further exhausts of the fuel conversion device to the exhausts from the at least one exhaust outlet.

An energy system, in particular for powering a propulsion unit for propelling an aircraft, is provided, comprising a corresponding energy conversion arrangement. The energy system may comprise the propulsion unit. The energy system may be provided as an engine and/or power plant for an aircraft.

An aircraft is provided comprising a corresponding energy conversion arrangement and/or a corresponding energy system.

The mixing process of the two exhaust flows is not trivial. Typically, the further exhausts can be provided as an outflow of a thermal management system (TMS) exhaust flow which is much larger than the flow of the fuel conversion device, which may be provided as an outflow of an air supply system (ASP) supplying the fuel conversion device with air for the fuel conversion. Still, both flows should be mixed as evenly as possible. Otherwise, some flow zones might still have a relatively high humidity and hence, a certain risk for condensation.

The further exhausts, e.g., thermal management system exhaust outflow, should mix with the air supply exhaust flow as completely as possible. If the thermal management exhaust flow mixes with the cold ambient air before mixing with the exhausts, e.g. air supply system exhaust flow, effectiveness may be lowered or even lost. Further, compactness is an important goal for engine design in aviation. Hence, the available mixing length for the two flows might be rather short.

The proposed solution enables to admix the further exhausts to the exhausts or vice versa, as desired or required. Through admixing the further exhausts to the exhausts from the at least one exhaust outlet, an even and complete mixing process may be enabled. The streams of exhausts and further exhausts may be merged in a beneficial way for achieving a desired mixing behaviour.

Further developments can be derived from the dependent claims and from the following description. Features described with reference to devices and arrangements may be implemented as method steps, or vice versa. Therefore, the description provided in the context of the energy conversion arrangement, energy system and/or aircraft applies in an analogous manner also to respective methods. In particular, the functions of the energy conversion arrangement, energy system and/or aircraft and of their or its, respectively, components may be implemented as method steps of the methods and the method steps may be implemented as functions of the energy conversion arrangement, energy system and/or aircraft.

According to an embodiment of an energy conversion arrangement, the at least one mixing assembly is arranged at a flow path of the further exhausts. Thereby, the further exhausts may be admixed to the exhausts, or vice versa, as desired or required for establishing certain mixing process. This may help to provide an efficient way of mixing the exhausts with the further exhausts in a preferably even and complete manner.

According to an embodiment of an energy conversion arrangement, the at least one mixing assembly is configured to let the further exhausts pass along the at least one exhaust outlet. Thereby, the further exhausts may pick up the exhausts on their way along the at least one exhaust outlet, or vice versa. This may further help to provide an efficient way of mixing the exhausts with the further exhausts in a preferably even and complete manner.

According to an embodiment of an energy conversion arrangement, the at least one exhaust outlet is configured as at least a part of a mixing device of the at least one mixing assembly. The mixing device may be arranged such that the exhausts and/or further exhausts can be led to the mixing device and/or bypassed the mixing device. This helps to provide an efficient way of selectively mixing the exhausts with the further exhausts as desired and/or required according to respective circumstances.

According to an embodiment of an energy conversion arrangement, the mixing device is configured to blow a stream of the further exhausts into a stream of the exhausts. Alternatively, or additionally, the stream of exhausts may be blown into the further exhausts. By blowing the streams into each other, shear forces and/or turbulences may be created in a certain mixing area and enhancing the mixing process.

According to an embodiment of an energy conversion arrangement, the mixing device is configured as at least one slot nozzle. The slot nozzle may help to create a broad flow of the exhausts in order to evenly distribute the exhausts when mixing them with the further exhausts. For example, the slot nozzle may essentially extend transversely along a flow path of the exhausts and/or the further exhausts. This may additionally help to provide an efficient way of mixing the exhausts with the further exhausts in a preferably even and complete manner.

According to an embodiment of an energy conversion arrangement, a manifold of the mixing device leads to at least two slot nozzles. Several slot nozzles may be arranged along the flow path of the exhausts and/or the further exhausts. This may improve the process of blowing the streams into each other, thereby creating shear forces and/or turbulences in a certain mixing area and enhancing the mixing process.

According to an embodiment of an energy conversion arrangement, the mixing device comprise guiding elements in the form of vanes, teeth, prongs and/or a comb. For example, such guiding elements may be arranged in within the mixing device, for example, near an outlet thereof leading to a mixing area. This may further improve the process of blowing the streams into each other, thereby creating shear forces and/or turbulences in a certain mixing area and enhancing the mixing process.

According to an embodiment of an energy conversion arrangement, the mixing device is configured to provide a mixing angle under which a flow of the exhausts enters the flow of the further exhausts. The mixing angle may be adjusted to provide a beneficial collision of the respective streams of the exhausts and the further exhausts. This may additionally improve the process of blowing the streams into each other, thereby creating shear forces and/or turbulences in a certain mixing area and enhancing the mixing process.

According to an embodiment of an energy conversion arrangement, the mixing angle amounts to less than 90°. Thereby, the stream of the exhausts may meet the stream of the further exhausts under an acute angle. This may help to adjust the process of blowing the streams into each other in a way that an optimal balance between shear forces and turbulences on the one hand, as well as coherent forces and an evenly distributed flow on the other hand, are provided. The mixing results may thus be balanced against any pressure drops and resulting efficiency losses. This may further help to provide an efficient way of mixing the exhausts with the further exhausts in a preferably even and complete manner.

According to an embodiment of an energy conversion arrangement, the mixing assembly comprises a throttle device configured to throttle a stream of the further exhausts. Alternatively, or additionally, the throttle device may be configured to throttle a stream of the exhausts and/or any exhausts mix. The throttle device can help to allow to adjust a mixing ratio of the exhausts and the further exhausts as desired or required. For example, the final device may serve as a control valve which can be controlled by means of a control unit, control device and/or control system. Thereby, the throttle device helps to admix the exhausts to the further exhausts, or vice versa, in a controlled manner.

According to an embodiment of an energy conversion arrangement, the throttle device comprises a flap configured to open and close a further exhaust outlet for the further exhausts. A position of the flap may be controlled by means of the control unit, control device and/or control system. The flap may be particularly advantageous in allowing to guide the further exhausts towards the exhausts while at the same time controlling the amount of further exhausts admixed to the exhausts of vice versa. This may additionally help to provide an efficient way of mixing the exhausts with the further exhausts in a preferably even and complete manner.

According to an embodiment of an energy conversion arrangement, the throttle device is configured to direct a stream of the further exhausts onto to a stream of the exhausts from the at least one exhaust outlet at least in an intermediate position between an open position and a closed position of the throttle device. In the closed position of the throttle device, the amount of further exhausts provided to the mixing assembly may be zero or essentially zero. In the open position of the throttle device, essentially all further exhausts available may be admixed to the exhausts. At least in the intermediate position, the flap may be directing a flow of the further exhausts at a flow the exhausts in a in a way that an optimal balance between shear forces and turbulences on the one hand, as well as coherent forces and laminar flow on the other hand, are provided. This may further help to provide an efficient way of mixing the exhausts with the further exhausts in a preferably even and complete manner.

Furthermore, should be noted that in terms of mass flows, the expression of admixing one flow to the other may depend on the respective amounts of exhausts and/or further exhausts, available. Hence, on the one hand, when the amount of exhausts is lower than the amount of further exhausts, the expression admixing may be interpreted such that the exhausts are admixed to the further exhausts. On the other hand, when the amount of further exhausts is lower than the amount of exhausts, the expression admixing may be interpreted such that the further exhausts are admixed to the exhausts. Hence, since in the present example, the throttle device may be provided to throttle a stream of the further exhausts, at least for a certain range of opening positions of the throttle device, the further exhausts may be regarded as being admixed to the exhausts, possibly, until the amount of further exhausts significantly exceeds the amount of exhausts.

Nevertheless, the expression admixing may also be interpreted as expressing which of the flows is taken up by another flow in terms of impulse. Hence, a flow with a relatively lower impulse may be regarded as being taken up by a flow with a relatively higher impulse. In any case, the expression admixing should not be regarded as excluding any setting or arrangement of mixing the exhausts and the further exhausts with each other, in particular if the amounts to be mixed can be adjusted and/or controlled as desired or required.

According to an alternative or additional solution, a method for controlling an energy conversion arrangement for an aircraft, comprising a fuel conversion device with a fuel cell system for converting at least one fuel to electrical energy, the method comprising the steps of monitoring at least one contrail formation parameter having a contrail formation range indicating a likelihood of contrail formation by exhausts of the fuel conversion device and/or by an exhausts mix containing the exhausts of the fuel conversion device and further exhausts of the energy conversion arrangement; and controlling a mixing ratio of the exhausts of the fuel conversion device with the further exhausts of the energy conversion arrangement to keep and/or bring the at least one contrail formation parameter out of at least one potential impact region of the contrail formation range indicative of a potential contrail impact to be avoided.

According to an aspect, a control program for controlling an energy conversion arrangement of an aircraft is provided, comprising a fuel conversion device with a fuel cell system for converting at least one fuel to electrical energy, wherein the control program comprises instructions which, when the control program is executed by a control device, cause the control device to carry out a responding method.

According to an aspect, a computer-readable data carrier having stored thereon a corresponding control program is provided.

According to an aspect, a control device for controlling an energy conversion arrangement of an aircraft is provided, comprising a fuel conversion device with a fuel cell system for converting at least one fuel to electrical energy, wherein the control device is configured to carry out a corresponding method and/or comprises a corresponding computer-readable data carrier.

According to an aspect, an energy conversion arrangement for an aircraft, comprising a fuel conversion device with a fuel cell system for converting at least one fuel to electrical energy, wherein the energy conversion arrangement is configured to carry out a corresponding method and/or comprises a corresponding control device.

According to an aspect, an aircraft comprising a corresponding energy conversion arrangement is provided.

The proposed solution allows for a control mechanism to switch between a contrail reduction mode and the standard operation mode of the energy conversion system. In the majority of flight conditions, no contrail reduction is needed, and the mixing may be omitted or at least reduced to a certain minimum amount. For example, mixing is only conducted, when certain contrail forming conditions are detected.

Contrails may have numerous different impacts including larger or smaller climate impacts, depending on ice crystal density, shape etc. Hence, even if a formation of contrails cannot be completely avoided, at least certain unwanted impacts, such as negative climate impacts of the contrails, can be avoided or at least reduced. Some contrails have a negative radiative balance. In other words, they are cooling the climate. It is proposed to differentiate between warming and cooling contrails.

In order to avoid warming contrails, the mixing ratio can be increased. In case of cooling contrails, the mixing may be omitted or at least reduced, since the mixing proves may create energy and/or pressure losses and also can cause unwanted upstream effects in the energy conversion arrangement. Through such a distinction, the probability of a creation of cooling contrails may be increased. The solution thus has the advantage over the prior art that it enables a selective and highly efficient way of reducing unwanted contract impacts. Fuel cell aircrafts can thus be operated efficiently without or at least with merely a minimised contributing to negative climate due to contrail formation.

The proposed solution provides a reduction of contrail formation for all kinds of aircraft, including but not limited to fuel cell aircraft. This includes energy systems for aircrafts comprising fuel cells for aircraft propulsion and/or as APUs. Compared to the prior art, the proposed solution is lighter, cheaper, uses less space and power and creates no new emissions. The proposed solution allows for mitigating a possible disadvantage of fuel cell powered aircrafts by reducing their contribution to contrail production, and thus enhancing their environmental friendliness.

According to an embodiment of a method, for controlling the mixing ratio, an amount of exhausts admixed to the further exhausts and/or an amount of further exhausts admixed to the exhausts is being controlled. The respective amounts admixed may be specifically tailored to adjust the at least one contrail formation parameter in view of a current potential impact region. For example, properties of cooling contrails (droplet size, number, etc.) may be adjusted by adding defined amounts of TMS outflow and hence heat to the ASP outflow. This adds another degree of freedom to the suggested contrail avoidance possibilities. In particular, the aging of ice crystals and hence the resulting ice crystal shape could be influenced. Hence, in the event, that contrails may not be provided or could possibly the acceptable, they may be created in a manner that has the least expected negative climate impact.

According to an embodiment of a method, the mixing ratio, an amount of exhausts admixed to the further exhausts and/or an amount of further exhausts admixed to the exhausts are or is, respectively, being held below a mixing threshold. The mixing threshold may be predefined. For example, the mixing threshold may be predefined for respective conditions of the energy conversion arrangement and/or the atmosphere surrounding the aircraft. The mixing ratio may thus be limited in order to not negatively impact efficiency and/or operability of the fuel conversion arrangement.

According to an embodiment of a method, the mixing ratio is being defined as a ratio having the amount of further exhausts as a nominator and the amount of exhausts as a denominator and is being kept zero, or at least essentially near zero, if the exhausts of the fuel cell system are out of the at least one potential impact region of the contrail formation range. Outside of contrail forming conditions, the outflows of TMS and ASP are separated, without any crossflows. This helps to avoid energy losses due to the mixing process.

According to an embodiment of a method, in a first impact region of the contrail formation range indicative of a first potential contrail impact, the exhausts of the fuel conversion device are being admixed to the further exhausts of the of the energy conversion arrangement and/or in a second impact region of the contrail formation range indicative of a second potential contrail impact, the further exhausts of the of the energy conversion arrangement are being admixed to the exhausts of the fuel conversion device. For example, in flight conditions where climate warming contrails form, the ASP outflow can be fully mixed with the TMS outflow, while in flight conditions where cooling contrails form, a controlled amount of the TMS outflow can be added to the ASP outflow to optimize the properties of the cooling contrail. A remaining TMS outflow can be emitted separately. This further helps to avoid energy losses due to the mixing process in that the mixing process is specifically tailored to respective flight conditions.

According to an embodiment of a method, a relative humidity of the exhausts is being at least temporarily reduced. For example, the relatively humidity of the exhausts of the energy conversion arrangement may be reduced by heating the exhausts. Furthermore, a relative humidity may be temporarily reduced by the mixing process, in particular, in that TMS outflow can be relatively dry than ASP outflow. The temporary reduction of the relative humidity of the exhausts helps to specifically and/or selectively apply contrail countermeasures as desired or required in respective flight conditions and/or on the ground.

According to an embodiment of a method, the contrail formation parameter comprises an exhaust temperature value, an exhaust pressure value and/or an exhaust humidity value of the exhausts, the further exhausts, and/or the exhausts mix, and/or an atmospheric temperature value, an atmospheric pressure value, an atmospheric humidity value, and/or atmospheric aerosol value of the atmosphere surrounding the aircraft. Any extrinsic and/or intrinsic physical and/or chemical property value of the exhausts, the further exhausts, the exhausts mix can be acquired, for example, before, during and/or after mixing the exhausts. An atmospheric concentration of aerosols can be indicative of respective particles and/or droplets contained in the atmosphere which may serve as nuclei for droplet and/or ice crystal formation. This further enhances the possibilities of allowing for a controlled application of the solution which further helps to apply contrail reduction manners in a flexible and adaptive manner.

According to an embodiment of a method, the contrail formation parameter comprises a plume condition value indicating at least one aspect of a physical and/or chemical condition of a plume of the exhausts and/or the exhausts mix behind the aircraft. The plume condition value may be detected by visual and/or radar detection means and may be detected from the aircraft, a satellite, a ground station and/or from another aircraft. The plume condition value may comprise at least one parameter value indicative of a temperature, pressure, humidity and/or composition of the plume, including of potential ice crystals contained therein. This further enhances the possibilities of allowing for a controlled application of the solution which further helps to apply contrail reduction manners in a flexible and adaptive manner.

According to an embodiment of an energy conversion arrangement, energy conversion arrangement further comprises a mixing assembly with at least one first control valve configured for admixing the exhausts of the fuel conversion device to the further exhausts of the of the energy conversion arrangement and/or with at least one second control valve configured for admixing the further exhausts of the of the energy conversion arrangement to the exhausts of the fuel conversion device. The control valves may be provided in the form of throttle devices configured to throttle a flow of the exhausts and/or the further exhausts, respectively, entering the mixing assembly. Thereby, flexible and adaptive way of adjusting the mixing ratio in the exhausts mix may be provided.

According to an embodiment of an energy conversion arrangement, the at least one first control valve is arranged in a flow path of the exhausts of the fuel conversion device downstream of an air supply system of the energy conversion arrangement and/or the at least one second control valve is arranged in a flow path of the further exhausts downstream of as thermal management system of the energy conversion arrangement. The air supply system (ASP) may provide air to the fuel conversion arrangement. The thermal management system (TMS) may help to regulate a temperature of the fuel conversion arrangement. By arranging the respective control valves downstream of the AFP and/or TMS, they may still fully fulfil their respective function and the impact of the mixing process on the operation of the fuel conversion arrangement can be minimised.

According to a further solution, a method for controlling an energy conversion arrangement for an aircraft, comprising a fuel conversion device with a fuel cell system having at least two fuel cell elements for converting at least one fuel to electrical energy, is provided, the method comprising the steps of monitoring at least one contrail formation parameter having a contrail formation range indicating a likelihood of contrail formation by exhausts of the fuel conversion device and/or by an exhausts mix containing the exhausts of the fuel conversion device and further exhausts of the energy conversion arrangement; and controlling the fuel cell system such the at least two fuel cell elements are being operated each at a different current density to keep and/or bring the at least one contrail formation parameter out of at least one potential impact region of the contrail formation range indicative of a potential contrail impact to be avoided.

Usually, voltage provided by a fuel cell decreases with higher current density, while the power density increases. In other words, fuel cells usually have a high efficiency at lower power levels, but a low efficiency at high power levels. The lower the efficiency, the more waste heat is produced. Nevertheless, and amount of water produced in the fuel cell per amount of hydrogen should remain constant.

The fuel cell system may comprise and/or may be comprised of at least one fuel cell unit containing multiple fuel cell elements which may be a single fuel cell that can constitute a respective smallest controllable element of the fuel cell unit. The aircraft may comprise multiple fuel cell units which may be used for generating electrical energy for propulsion of the aircraft and/or for powering auxiliary systems of the aircraft, such as an auxiliary power unit (APUs).

A deliberate efficiency reduction can be realized by operating fuel cell elements at different power densities. This can be achieved by operating some fuel cell driven propulsion units and/or engines at a higher power level and others which can thus be operated at a relatively low power level. Another option is to operate one or more fuel cell elements, e.g., stacks, within a fuel cell engine at a higher power density than the others. As a result, some stacks will provide little power at a high efficiency while others provide much power at a lower efficiency. Overall, the efficiency is lower than at an equal power density, the hydrogen consumption is higher, but the overall power provided to the aircraft can remain constant.

The proposed solution thus allows for an intentional degradation of the efficiency of the fuel cell reaction and can be applied to produce more heat in order to have an exhaust flow with a lower relative humidity, considering that a fuel cell usually has a lower efficiency at higher power densities. Consequently, a combined exhaust flow and/or exhausts mix can be warmer and much drier than the exhaust flow from the air supply system for themselves. This strongly reduces the risk for droplet condensation in the engine plume and hence reduces the risk of undesired contrail formation.

Contrails may have numerous different impacts including larger or smaller climate impacts, depending on ice crystal density, shape etc. Hence, even if a formation of contrails cannot be completely avoided, at least certain unwanted impacts, such as negative climate impacts of the contrails, can be avoided or at least reduced. Respective controlled contrail reduction measures should thus be applied only during flight through a region with the risk for contrail formation.

According to an embodiment of a method, the at least two fuel cell elements are associated to respective different fuel cell stacks of the fuel cell system. In other words, a stack-wise imbalance may be used to operate the at least two fuel cell elements at a different current density. Such an imbalance may be a simple way to provide increased heat output for keeping and/or bringing at least one contrail formation parameter out of at least one potential impact region of the contrail formation range indicate of a potential contrail region to be avoided.

According to an embodiment of a method, at least one of the at least two fuel cell elements is operated at a different fuel conversion rate as the other at least one of the at least two fuel cell elements. The different current densities of the at least two fuel cell elements may be achieved by the different fuel conversion rates. The resulting imbalance in the fuel conversion rate of the at least two fuel cell elements may again be a simple way to provide increased heat output for keeping and/or bringing at least one contrail formation parameter out of at least one potential impact region of the contrail formation range indicate of a potential contrail region to be avoided.

According to an embodiment of a method, at least one of the at least two fuel cell elements is operated at a different power density as the other at least one of the at least two fuel cell elements. For example, two fuel cell elements of the same fuel cell unit may be operated at different power density. Thereby, highly flexible way of adjusting the power output and thus the waste heat ratio of the fuel cell system may be provided.

According to an embodiment of a method, a waste heat ratio of the fuel cell system is at least temporarily being increased to bring the at least one contrail formation parameter out of the contrail formation range. For example, the waste heat ratio may be increased by operating the at least two fuel cell elements at a different current density. Alternatively, or additionally, a thermal management system may be controlled in a manner that the waste heat ratio is at least temporarily increased. This may further help to reduce a relative humidity of the exhausts and thus the risk of contrail formation.

According to an embodiment of a method, a temperature of exhausts produced in the fuel conversion device by the fuel conversion is being at least temporarily increased for bringing the at least one contrail formation parameter out of the contrail formation range. For example, the temperature may be increased by operating the at least two fuel cell elements are at a different current density. Alternatively, or additionally, a thermal management system may be controlled in a manner that the temperature is at least temporarily increased. This may additionally help to reduce a relative humidity of the exhausts and thus the risk of contrail formation.

According to an embodiment of a method, a relative humidity of the exhausts is being at least temporarily reduced for bringing the at least one contrail formation parameter out of the contrail formation range. A temporary reduction of relative humidity for a selected flight region may be achieved by a targeted application of the proposed solution, adjusting the internal balance of the fuel cell elements and/or energy output of the fuel cell system such that a thermal energy output can be increased for at least a part of a selected flight path to keep and/or bring the at least one contrail formation parameter out of at least one potential impact region of the contrail formation range indicative of a potential contrail impact to be avoided.

According to an embodiment of a method, an aircraft speed and/or aircraft altitude is held essentially unchanged within a predefined speed range and/or altitude range, respectively. In other words, the aircraft may increase fuel consumption and/or power output by the energy conversion arrangement through adjusting the internal balance of the fuel cell elements and/or energy output of the fuel cell system the at least one contrail formation parameter out of the contrail formation range without changing speed and/or altitude. At a lower efficiency, the fuel cell produces more waste heat in relation to the produced water. This reduces the relative humidity at the combined exhaust and hence reduces the risk for droplet formation, condensation, and contrail formation.

According to an embodiment of a method, the contrail formation parameter comprises an exhaust temperature value, an exhaust pressure value and/or an exhaust humidity value of the exhausts, the further exhausts, and/or the exhausts mix, and/or an atmospheric temperature value, an atmospheric pressure value, an atmospheric humidity value, and/or atmospheric aerosol value of the atmosphere surrounding the aircraft. Any extrinsic and/or intrinsic physical and/or chemical property value of the exhausts, the further exhausts, the exhausts mix can be acquired, for example, before, during and/or after mixing the exhausts. An atmospheric concentration of aerosols can be indicative of respective particles and/or droplets contained in the atmosphere which may serve as nuclei for droplet and/or ice crystal formation. This further enhances the possibilities of allowing for a controlled application of the solution which further helps to apply contrail reduction manners in a flexible and adaptive manner.

According to an embodiment of a method, the contrail formation parameter comprises a plume condition value indicating at least one aspect of a physical and/or chemical condition of a plume of the exhausts and/or the exhausts mix behind the aircraft. The plume condition value may be detected by visual and/or radar detection means and may be detected from the aircraft, a satellite, a ground station and/or from another aircraft. The plume condition value may comprise at least one parameter value indicative of a temperature, pressure, humidity and/or composition of the plume, including of potential ice crystals contained therein. This further enhances the possibilities of allowing for a controlled application of the solution which further helps to apply contrail reduction manners in a flexible and adaptive manner.

According to a further possible solution, a method for controlling an energy conversion arrangement for an aircraft, comprising a fuel conversion device with a fuel cell system for converting at least one fuel to electrical energy, is provided, the method comprising the steps of monitoring at least one contrail formation parameter having a contrail formation range indicating a likelihood of contrail formation by exhausts of the fuel conversion device and/or by an exhausts mix containing the exhausts of the fuel conversion device and further exhausts of the energy conversion arrangement; and controlling the fuel cell system such that its energy output is increased to keep and/or bring the at least one contrail formation parameter out of at least one potential impact region of the contrail formation range indicative of a potential contrail impact to be avoided.

According to an embodiment of a method, the fuel cell system has at least two fuel cell elements, and a current density of at least one of the at least two fuel cell elements is increased. The fuel cell elements can be associated to respective different fuel cell stacks of the fuel cell system. The fuel cell system may comprise and/or may be comprised of a fuel cell unit containing multiple fuel cell elements which may be a single fuel cell that can constitute a respective smallest controllable element of the fuel cell unit. The aircraft may comprise multiple fuel cell units which may be used for generating electrical energy for propulsion of the aircraft and/or for powering auxiliary systems of the aircraft, such as an auxiliary power unit (APUs). This allows a controlled application of the solution to selected fuel cell elements which further helps to apply contrail reduction manners in a flexible and adaptive manner.

According to an embodiment of a method, a fuel conversion rate of the fuel cell system is being increased. At least one of the at least two fuel cell elements or units can be operated at a different fuel conversion rate as the other at least one of the at least two fuel cell elements or units, respectively. At least one of the at least two fuel cell elements or units can be operated at a different power density as the other at least one of the at least two fuel cell elements or units. This additionally allows a controlled application of the solution to selected fuel cell elements which further helps to apply contrail reduction manners in a flexible and adaptive manner.

According to an embodiment of a method, an electrical output and/or a thermal output of the energy conversion arrangement is being increased. The increased electrical output may be provided to a propulsion system and/or to an energy storage system of the aircraft. A waste heat ratio of the fuel cell system can be at least temporarily increased. The additional waste heat can be used to reduce a relative humidity of the exhausts and thus the risk of contrail formation.

According to an embodiment of a method, an energy supply to at least one propulsion unit of the aircraft is being increased. The propulsion system may comprise multiple propulsion units. The respective at least one propulsion unit and thus deliver a higher thrust than other propulsion units of the aircraft. This may further help to bring a waste heat ratio of the at least one propulsion unit and to a range where a relative humidity of the exhausts and thus the risk of contrail formation can be reduced to a desired degree.

According to an embodiment of a method, a temperature of exhausts produced in the fuel conversion device by the fuel conversion is being at least temporarily increased. For example, a thermal management system may be controlled in a manner that the temperature of exhausts and the fuel conversion device is at least temporarily increased, such that the heat flow of the exhausts is increased. This may further help to reduce a relative humidity of the exhausts and thus the risk of contrail formation.

According to an embodiment of a method, a relative humidity of the exhausts is being at least temporarily reduced. A temporary reduction of relative humidity for a selected flight region may be achieved by a targeted application of the proposed solution, adjusting the energy output of the fuel cell system such that its energy output can be increased for at least a part of a selected flight path to keep and/or bring the at least one contrail formation parameter out of at least one potential impact region of the contrail formation range indicative of a potential contrail impact to be avoided.

According to an embodiment of a method, an aircraft speed and/or aircraft altitude are or is, respectively, being increased. In other words, the aircraft may accelerate and/or climb for keeping and/or bringing the at least one contrail formation parameter out of the contrail formation range. Due to acceleration and/or climbing, the energy output of the fuel cell system can be at least temporarily increased. The aircraft speed and/or the aircraft altitude can be held essentially unchanged before and/or after increase in order to be kept within a predefined speed range and/or altitude range, respectively. An increase of the velocity of a fuel cell aircraft during flight may be particularly applied through regions with a certain risk of contrail formation. An increased flight velocity requires more power, which means that the fuel cells operate at a lower efficiency. At a lower efficiency, the fuel cell produces more waste heat in relation to the produced water. This reduces the relative humidity at the combined exhaust and hence reduces the risk for droplet formation, condensation and contrail formation.

According to an embodiment of a method, the contrail formation parameter comprises an exhaust temperature value, an exhaust pressure value and/or an exhaust humidity value of the exhausts, the further exhausts, and/or the exhausts mix, and/or an atmospheric temperature value, an atmospheric pressure value, an atmospheric humidity value, and/or atmospheric aerosol value of the atmosphere surrounding the aircraft. Any extrinsic and/or intrinsic physical and/or chemical property value of the exhausts, the further exhausts, the exhausts mix can be acquired, for example, before, during and/or after mixing the exhausts. An atmospheric concentration of aerosols can be indicative of respective particles and/or droplets contained in the atmosphere which may serve as nuclei for droplet and/or ice crystal formation. This further enhances the possibilities of allowing for a controlled application of the solution which further helps to apply contrail reduction manners in a flexible and adaptive manner.

According to an embodiment of a method, the contrail formation parameter comprises a plume condition value indicating at least one aspect of a physical and/or chemical condition of a plume of the exhausts and/or the exhausts mix behind the aircraft. The plume condition value may be detected by visual and/or radar detection means and may be detected from the aircraft, a satellite, a ground station and/or from another aircraft. The plume condition value may comprise at least one parameter value indicative of a temperature, pressure, humidity and/or composition of the plume, including of potential ice crystals contained therein. This further enhances the possibilities of allowing for a controlled application of the solution which further helps to apply contrail reduction manners in a flexible and adaptive manner.

According to an alternative or additional solution, an energy conversion arrangement for an aircraft is provided, comprising a fuel conversion device, in particular a fuel cell system, for converting at least one fuel to electrical and/or mechanical energy, and an exhaust outlet for letting out exhausts produced in the fuel conversion device by the fuel conversion; wherein at least one mixing assembly is arranged in a flow path of the exhausts before and/or after the exhaust outlet and is configured to mix the exhausts with further exhausts from the energy conversion arrangement.

Waste heat of a fuel cell aircraft system can be used in the mixing assembly to avoid a high supersaturation in the plume of the discharged humid exhaust flow of fuel conversion device, e.g., a fuel cell system. This can be achieved by mixing the humid exhaust flow of the air supply system with a warm and dry gas flow before it can mix with the cold ambient air. Thereby, a maximum supersaturation in the plume and hence the number of droplets formed therein by be reduced. A decreased number of droplets reduces an amount of possible ice crystal formation and hence reduces contrail impact. In principle, a corresponding solution may utilise any heat source for providing the further exhausts.

According to an aspect of an energy conversion arrangement, the energy conversion arrangement further comprises a thermal management system configured to produce the further exhausts. A further exhaust flow provided by the thermal management system can be advantageous as it offers large amounts of waste heat and is usually located in close vicinity to the humid exhaust flow of the fuel conversion device. Consequently, the thermal management system may contribute to enhancing and overall energetic efficiency of the energy conversion arrangement, while at the same time reducing contrail production.

According to an aspect of an energy conversion arrangement, the thermal management system is configured as a heat exchanger. Thereby, the thermal management system may draw waste and/or surplus heat from any component of the aircraft in order to provide the further exhausts. This helps in further improving an overall energetic efficiency of the aircraft while at the same time contributing to contrail reduction.

According to an aspect of an energy conversion arrangement, the thermal management system comprises at least one heat exchanger element configured to extract heat from the fuel conversion device and/or any auxiliary energy conversion unit. The heat exchanger element can help in cooling the fuel conversion device and/or any auxiliary energy conversion unit down to a desired respective operating temperature. This additionally helps in further improving an overall energetic efficiency of the aircraft while at the same time contributing to contrail reduction.

According to an aspect of an energy conversion arrangement, the thermal management system is configured to take in cooling air, heat up the cooling air, and discharge the heated-up cooling air as the further exhausts. Otherwise, the cooling air would probably have to be injected from the aircraft anyway. Consequently, using the cooling air for at least partly providing the further exhausts provides synergetic effects when applying the further exhausts for contrail reduction.

According to an aspect of an energy conversion arrangement, the thermal management system is configured to take in the cooling air from ambient surroundings. If taken up from ambient surroundings, in particular at cruising altitudes of aircrafts, the cooling air may be particularly cold and dry. Hence, heating up the cooling air by means of the thermal management system even further adds to the relative dryness of the cooling air. Thus, mixing the relatively dry cooling air with the exhausts can help in reducing humidity of the overall exhausts of the aircraft, which may be beneficial for reducing contrails.

According to an aspect of an energy conversion arrangement, the thermal management system is configured to provide the fuel conversion device with a coolant at a coolant inlet temperature, and to receive back from the fuel conversion device the coolant at a coolant outlet temperature, wherein the coolant inlet temperature is lower than the coolant outlet temperature at least when the fuel conversion device operates at an operating temperature. The coolant thus helps in regulating the temperature of the fuel conversion device. Consequently, the coolant may contribute to enhancing and overall energetic efficiency of the energy conversion arrangement, while at the same time reducing contrail production.

According to an aspect of an energy conversion arrangement, the energy conversion arrangement further comprises an air supply system for supplying the fuel conversion device with supply air for the fuel conversion arranged upstream of the exhaust outlet. Consequently, the exhausts may at least partly flow through the air supply system. Consequently, the air supply system may be used to heat up the exhausts. This may help in reducing contrail production in that a relative humidity of the exhausts is being reduced.

According to an aspect of an energy conversion arrangement, the air supply system comprises a compressing device for supplying the fuel conversion device with compressed inlet air to be used for the fuel conversion; and at least one heat exchange unit configured to extract heat from the compressing device and/or the compressed air to be used for the conversion. The compressing device and/or compressed air may be cooled by means of the heat exchange unit. Thus, the heat exchange may help to improve overall energetic efficiency of the energy conversion arrangement, while at the same time contributing to contrail reduction.

According to an aspect of an energy conversion arrangement, the at least one heat exchange unit configured to heat up the exhausts. Heating up the exhausts may help in reducing a relative humidity of the exhausts. The reduced relative humidity may decrease the amount of contrails produced and may facilitate dissipation of any remaining contrails.

According to an aspect of an energy conversion arrangement, the energy conversion arrangement further comprises an expansion device for decompressing the exhausts arranged in the flow path of the exhausts upstream of the mixing assembly. The expansion device may be configured to generate electrical and/or mechanical energy by expanding the exhausts. The expansion device may comprise at least one turbine. The expansion device may be part of the air supply system. Consequently, the expansion device may help to improve overall energetic efficiency of the energy conversion arrangement.

According to an aspect of an energy conversion arrangement, the further exhausts provide a gas flow that is relatively drier than the exhausts. Thus, mixing the further last with the exhausts can help in reducing humidity of the overall exhausts of the aircraft, which may be beneficial for reducing contrails. The mixing operation may be applied whenever necessary in order to achieve a desired amount of contrail reduction. Consequently, the mixing operation helps in providing a versatile store of measures for contrail reduction.

According to an aspect of an energy conversion arrangement, the mixing assembly comprises a further exhaust outlet opening configured to let out the further exhausts to ambient surroundings; wherein the exhaust outlet has an exhaust outlet opening configured to let out the exhausts to the ambient surroundings; and wherein the further exhaust outlet is arranged before the exhaust outlet with respect to an intended direction of movement of the aircraft during standard operation of the aircraft along a discharge line extending essentially in parallel to the direction of movement. The further exhaust outlet opening can be arranged before the exhaust outlet opening such that warm and dry further exhaust air is mixed with humid air exhausts from the fuel conversion device during operation of the aircraft. Mixing the further exhausts with the exhausts in such a way may help in additionally reducing a relative humidity of the overall exhausts of the aircraft. The reduced relative humidity may decrease the amount of contrails produced and may facilitate dissipation of any remaining contrails.

According to a further solution an energy conversion arrangement for an aircraft may be provided, comprising a fuel conversion device, in particular a fuel cell system, for converting at least one fuel to electrical and/or mechanical energy, and an exhaust outlet for letting out exhausts produced in the fuel conversion device by the fuel conversion; wherein at least one heating device is arranged in a flow path of the exhausts before the exhaust outlet and is configured to heat up the exhausts.

The heating device provides a heat source between the fuel conversion device and the exhaust outlet of the aircraft. The heating reduces the saturation, i.e., relative humidity, of the exhaust gas flow. A lower saturation reduces or altogether prevents droplet formation and condensation in the exhaust system. Droplet formation might still occur in the plume of the propulsion system. However, a likelihood of the formation of a large number of small droplets is reduced. This decreases the risk of contrail formation. Compared to the prior art, the solution is lighter, has lower costs and uses less space and power.

According to an aspect of an energy conversion arrangement, the energy conversion arrangement may further comprise an expansion device arranged in the flow path of the exhausts and configured to generate electrical and/or mechanical energy by expanding the exhausts. The electrical and/or mechanical energy generated by the expansion device may be used for operating the energy conversion arrangement, in particular the fuel conversion device. Consequently, an overall energetic efficiency of the energy conversion arrangement may be improved.

According to an aspect of an energy conversion arrangement, the expansion device comprises at least one turbine. By means of the at least one turbine, electrical and/or mechanical energy may be generated by the decompression of the exhausts. Hence, the at least one turbine helps in improving an overall energetic efficiency of the energy conversion arrangement.

According to an aspect of an energy conversion arrangement, the expansion device is arranged in the flow path of the exhausts after the heating device. The expansion device may be arranged between the heating device and the air outlet, i.e., before the air outlet. The heating device may thereby raise a temperature of the exhausts and may thereby increase a power output of the expansion device if used for generating electrical and/or mechanical energy. Thereby, the heating device helps in improving an overall energetic efficiency of the energy conversion arrangement.

According to an aspect of an energy conversion arrangement, the heating device comprises a catalytic converter for converting fuel residuals which have been left unconverted by the fuel conversion device to heat. The catalytic converter maybe configured to convert at least one fuel to heat. The catalytic converter, e.g., provided as a catalytic burner, can process leftover hydrogen from a fuel cell reaction. The hydrogen reacts with oxygen to water while releasing heat. Thereby, the catalytic burner may help in enhancing contrail reduction by means of the heating device. Furthermore, the catalytic can prevent fuel emissions from the energy conversion arrangement.

According to an aspect of an energy conversion arrangement, the catalytic converter is configured to convert an additional fuel to heat. Also, additional hydrogen might be added to the flow upstream of the catalytic converter. Thereby, the effect of the catalytic converter for providing heat to be added to the exhausts through the heating device can be optimised for further enhanced contrail reduction.

According to an aspect of an energy conversion arrangement, the energy conversion arrangement further comprises a residual sensor element configured to measure at least one residual parameter value corresponding to an amount of the fuel residuals. In other words, the residual sensor element may measure an amount of fuel residuals, e.g., hydrogen residuals, in the exhausts. The amount of fuel residuals can be expressed by means of the residual parameter value. The residual parameter value can be used for optimising operation of the energy conversion arrangement in order to further reduce contrail production.

According to an aspect of an energy conversion arrangement, the energy conversion arrangement further comprises an auxiliary fuel inlet arranged in the flow path of the exhausts before the catalytic converter for adding at least one fuel to the exhausts. By adding at least one fuel and/or additional fuel, the heat output of the catalytic converter can be adapted to respective requirements. Thus, the effect of the catalytic converter for providing heat to be added to the exhausts through the heating device can be optimised for further enhanced contrail reduction.

According to an aspect of an energy conversion arrangement, the heating device comprises at least one combustion unit configured to burn at least one fuel for heating up the exhausts. The combustion can be supplied with hydrogen from the same source as for the fuel cell. The combustion unit can provide additional heat to be introduced by the heating device. Thereby, the combustion unit can help in assuring a desired degree of contrail reduction.

According to an aspect of an energy conversion arrangement, the heating device comprises at least one heat exchange unit configured to heat up the exhausts. The heat exchanger can transfer heat from hotter flows in the fuel cell system. The heat exchange unit may provide any kind of waste and/or surplus heat to be used by the heating device. Thereby, the heat exchange unit can provide an efficient way for contrail reduction.

According to an aspect of an energy conversion arrangement, the energy conversion arrangement further comprises a compressing device for supplying the fuel conversion device with compressed supply air to be used for the fuel conversion; wherein the at least one heat exchange unit is configured to extract heat from the compressing device and/or the compressed supply air to be used for the conversion. Compressed supply air may be cooled by means of the heat exchange unit. Thereby, the heating device may help in further improving an overall energetic efficiency of the energy conversion arrangement, while at the same time contributing to contrail reduction.

According to an aspect of an energy conversion arrangement, the at least one heat exchange unit is configured to extract heat from the fuel conversion device and/or any auxiliary energy conversion unit. The heat exchange unit may be configured to cool down at least parts of the heat exchange unit and/or any auxiliary energy conversion unit. For example, auxiliary energy conversion units may be electrical and/or mechanical energy converters. Thereby, the heating device may help in further improving an overall energetic efficiency of the energy conversion arrangement, while at the same time contributing to contrail reduction.

According to an aspect of an energy conversion arrangement, the at least one heating device comprises an electrically powered heating element. The electric power for the electric heating can be supplied from the energy conversion arrangement. For example, the electric power may be provided through any energy recuperation means. Heating the exhausts by means of electric power may help in assuring a desired degree of contrail reduction.

According to another additional solution, an energy conversion arrangement for an aircraft may be provided, comprising a fuel conversion device, in particular a fuel cell system, for converting at least one fuel to electrical and/or mechanical energy; an expansion device arranged in a flow path of exhausts produced in the fuel conversion device and configured to decompress the exhausts; an exhaust outlet for letting out exhausts produced in the fuel conversion device by the fuel conversion; and at least one bypass duct configured to allow the exhausts to bypass the expansion device on their way from the fuel conversion device to the exhaust outlet.

In a typical air supply system of a fuel conversion device, such as a fuel cell, ambient air is compressed and fed to the fuel conversion device. After the fuel conversion device, the now humid air is typically expanded in an expansion device, such as a turbine, and then emitted back to the ambient. The bypass duct can connect to any duct defining the flow path and/or any kind of source of the exhausts upstream of the expansion device and thus enable relatively humid exhausts from the fuel conversion device, such as air from a fuel cell, to partially, or completely bypass the expansion device, such as a turbine. Hence no or at least far less enthalpy is withdrawn from the fluid exhausts in comparison to if they are being decompressed in the expansion device.

A certain expansion in the bypass, e.g., in a valve or nozzle, may be inevitable, such that some droplets might form. This is due to the high saturation caused by the low static temperature which is a result of the high flow velocities during expansion. Consequently, the droplets will partly or completely evaporate when the flow is decelerated. However, when the flow of exhausts is decelerated, the static temperature rises again, as the total temperature remains unchanged. This will lead to a partial or complete evaporation of the droplets formed in the bypass. Hence, fewer droplets are emitted, and the contrail contribution of the energy conversion arrangement is reduced. Contrary to that, when being decompressed in the expansion device, for example, a turbine, the droplets might not evaporate, as the expansion device withdraws enthalpy and hence reduces the total temperature of the flow.

The solution particularly allows for bypassing the expansion device during flight through ISSR where persistent contrails can form. In this way, no enthalpy is withdrawn from the humid exhaust air and its total temperature remains unchanged. Hence, under stagnation conditions, the saturation temperature remains unchanged, and therefore, no droplets are formed. A main advantage of the solution may thus be seen in allowing to bypass any component of the energy conversion arrangement, which under respective conditions has a strong contrail contribution. The emission of fewer or no droplets from the exhaust outlet reduces the contrail impact of the energy conversion system.

Furthermore, for example, if the expansion device comprises a turbine, bypassing the expansion device may help to prevent the turbine from stalling or blocking in case of an overload by a certain mass flow and/or volumetric flow of exhausts entering the turbine. The bypass duct can thus also be used for regulating the turbine and/or operating it in a desired operating range. The bypass duct may additionally help to prevent unwanted condensation of water vapour contained in the exhausts within the turbine. This particular the case, if any means, such as a heating device and/or heat exchange device arranged upstream of the expansion device is not present, not enabled or does not provide an amount of heat to the exhausts sufficient for avoiding the condensation.

According to an aspect of an energy conversion arrangement, the bypass duct connects to the flow path via a junction. The junction may be located and shaped such that it enables to advantageously branch off and/or completely guide the exhausts such that they are led through the bypass duct. Thereby, the junction helps in improving operation and flexibility of the energy conversion arrangement.

According to an aspect of an energy conversion arrangement, the junction comprises at least one switch valve for switching the flow path from the fuel conversion device to the expansion device and/or the exhaust outlet. The switch valve may be located, shaped, and/or operated such that it enables to advantageously branch off and/or completely guide the exhausts such that they are led through the bypass duct. Thereby, the switch valve helps in further improving operation and flexibility of the energy conversion arrangement.

According to an aspect of an energy conversion arrangement, the switch valve allows for gradual switching of the flow path. Thereby, an amount of exhausts passing through the bypass duct and/or the expansion device can be regulated and/or adjusted as required. This helps in further improving operation and flexibility of the energy conversion arrangement.

According to an aspect of an energy conversion arrangement, the switch valve allows for a steplessly variable switching of the flow path. Thereby, an amount of exhausts passing through the bypass duct and/or the expansion device can be finely regulated and/or adjusted according to respective requirements. This helps in further improving controllability and flexibility of the energy conversion arrangement.

According to an aspect of an energy conversion arrangement, the bypass duct ends in the vicinity of the exhaust outlet. Thereby, the flow path of the exhausts leading through the expansion device and a flow path of the exhausts leading through the bypass duct may be joined near the exhaust outlet. This may help in mixing the exhausts from the expansion device and the bypass duct in an advantageous manner for reducing contrail production, for example, by means of a respective mixing assembly which may comprise a flow path of the exhausts exiting the expansion device and/or a flow path of the exhausts defined by the bypass duct, and/or respective outlets thereof.

According to an aspect of an energy conversion arrangement, the bypass duct ends within the exhaust outlet. Thereby, the bypass duct or termination or outlet opening thereof may form a part of the exhaust outlet and/or may be integrated therein. This may further help in mixing the exhausts coming from the expansion device and the bypass duct in an advantageous manner for reducing contrail production, for example, by means of a respective mixing assembly.

According to an aspect of an energy conversion arrangement, at the exhaust outlet, the flow path leading through the expansion device and the flow path leading through the bypass duct are joined. The exhaust outlet may comprise both, an outlet of the flow path leading through the expansion device, and an outlet of the flow path leading through the bypass duct. This may further help in mixing the exhausts from the expansion device and the bypass duct in an advantageous manner for reducing contrail production, for example, by means of a respective mixing assembly.

According to an aspect of an energy conversion arrangement, the flow path leading through the expansion device and the flow path leading through the bypass duct are at least partially extending and/or terminating in parallel and/or coaxially with respect to each other. On the one hand, this may help in arranging the flow paths such that it allows for a heat exchange between the exhausts that are led through the expansion device and the exhausts that are led through the bypass duct. On the other hand, mixing the exhausts from the expansion device and the bypass duct in an advantageous manner may be enhanced for reducing contrail production, for example, by means of a respective mixing assembly.

According to an aspect of an energy conversion arrangement, the energy conversion arrangement further comprises at least one sensor for providing at least one measurement value representing a temperature value, pressure value and/or humidity value of the exhausts and/or the energy conversion arrangement. The measurement value may be obtained in or at the flow path of the exhausts before, after and/or within the expansion device. Furthermore, the measurement value may be obtained for representing the surroundings of the energy system and/or an aircraft comprising the energy system, such that the measurement value represents any condition of the atmosphere surrounding the aircraft. Thereby, the at least one measurement value may help in operating the energy conversion arrangement in a way that contrails are avoided or at least reduced.

According to an aspect of an energy conversion arrangement, the energy conversion arrangement further comprises a control unit configured to adjust the flow path through the bypass duct based on the at least one measurement value. In particular bypassing a turbine may reduce the energetic efficiency of the energy system as no or at least less enthalpy can be regained from the exhaust flow. Hence, it may be beneficial to only activate the bypass when persistent contrails can form, such as during flight through an ISSR. Furthermore, the control unit may help to operate the expansion device in a desired and/or required manner. Thus, control unit helps in improving operation and flexibility of the energy conversion arrangement.

According to an aspect of an energy conversion arrangement, the control unit is configured to keep the at least one measurement value within a pre-defined value range, and/or above or below a predefined value limit. The switch valve may function as a two-way or three-way discharge valve. Preferably, the bypass duct may only be activated when there is a risk of persistent contrail formation. Such an active mode of the bypass duct may help to an overall impact of bypassing the expansion device on efficiency of the energy system. When activated, the system efficiency could be reduced as no enthalpy can be regained from a turbine. Consequently, the control unit helps in further improving operation and flexibility of the energy conversion arrangement.

According to an aspect of an energy conversion arrangement, the bypass duct connects to at least one mixing assembly which is arranged in a flow path of the exhausts before and/or after the exhaust outlet and is configured to mix the exhausts with further exhausts from the energy conversion arrangement. The bypass duct can be configured to bypass at least one contrail reduction device, heating device and/or heat exchange device arranged in a flow path of air fed to the fuel conversion device and/or in the flow path of the exhausts, respectively. This may help in further improving operation, flexibility, and efficiency of the energy conversion arrangement.

### Brief Description of the Drawings

The subject matter will hereinafter be described in conjunction with the following drawing figures, wherein like numerals denote like elements, and wherein:
Fig. 1 is a schematic side view of an aircraft comprising an energy system with an energy conversion arrangement producing a plume of exhausts during flight.
Fig. 2 is a schematic illustration of an energy conversion arrangement comprising a contrail reduction device.
Fig. 3 is a schematic illustration of another embodiment of an energy conversion arrangement provided with a heating device.
Fig. 4 is a schematic illustration of the energy conversion arrangement shown in Fig. 3 where the heating device comprises a catalytic converter.
Fig. 5 is a schematic illustration of the energy conversion arrangement shown in Figs. 3 and 4 where the heating device comprises a combustion chamber.
Fig. 6 is a schematic illustration of the energy conversion arrangement shown in Figs. 3 to 5 where the heating device comprises a heat exchange device.
Fig. 7 is a schematic illustration of the energy conversion arrangement shown in Figs. 3 to 6 where the heating device comprises an electric heating element and a bypass duct is provided.
Fig. 8 is a schematic illustration of a thermal management system of any of the embodiments of an energy conversion arrangement shown herein.
Fig. 9 is a schematic diagram showing plume mixing lines in the atmosphere.
Fig. 10 is a schematic diagram of relative humidity within a plume while mixing in the atmosphere.
Fig. 11 is a schematic side view of aircrafts, a satellite and a control station configured for monitoring and/or controlling properties of a plume of exhausts during flight of an aircraft.
Fig. 12 is a schematic top view of an aircraft comprising a control device for monitoring and controlling properties a composition of exhausts.
Fig. 13 is a schematic illustration of a further embodiment of an energy conversion arrangement provided with at least one control valve for admixing the exhausts to the further exhausts and/or for admixing the further exhausts to the exhausts.
Fig. 14 is a schematic representation of possible steps of a method for operating the energy conversion arrangement.
Fig. 15 is a schematic perspective view of an embodiment of a mixing assembly.
Fig. 16 is a schematic perspective view of another embodiment of a mixing assembly.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

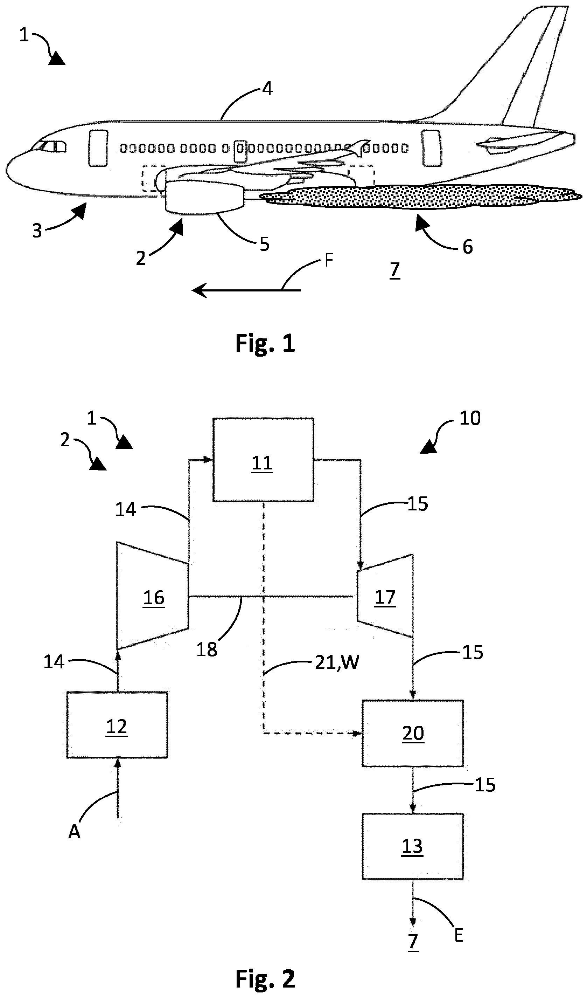

Fig. 1 shows a schematic side view of an aircraft 1 comprising an energy system 2 and a fuselage 3 with and surrounded by a hull 4. For example, the energy system 2 comprises a propulsion unit 5 emitting a plume 6 of humid exhaust air into the atmosphere 7 behind the aircraft 1 while the aircraft 1 travels through the atmosphere 7 along a travel direction F. The humid exhaust air from the air supply system is emitted from the aircraft and mixes with the ambient cold air. The humid exhaust air can be itself unsaturated, oversaturated or saturated with droplets present. Typical values for temperature and relative humidity of the emitted humid air range from 30°C to 80°C and 60% to 300%, respectively. Furthermore, the hull 4 may surround any interior space of the aircraft including a cabin for transporting passengers and goods as well as comprising any components of the energy system 2.

Fig. 2 shows a schematic illustration of an energy conversion arrangement 10 of the energy system 2 of the aircraft 1. The energy conversion arrangement 10 comprises a fuel conversion device 11, for example, provided as a fuel cell system for converting hydrogen to electricity and predominantly water vapour as exhausts E of the fuel conversion. Air A, for example taken from ambient surroundings, such as the atmosphere 7, and/or from inside the hull 4, e.g., from a cabin of the aircraft 1, is provided to the fuel conversion arrangement 11 through an air inlet 12 of the energy conversion arrangement 10. The exhausts

E are released to the atmosphere 7 through an exhaust outlet 13 of the energy conversion arrangement 10.

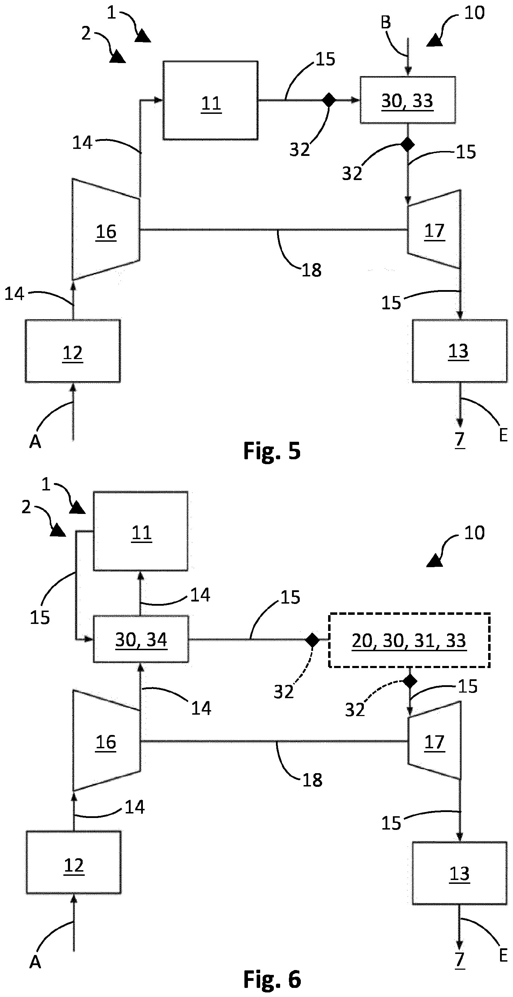

The air A is guided along a respective flow path 14 from the air inlet 12 to the fuel conversion device 11. The exhausts E are guided along a respective flow path 15 from the fuel conversion device 11 to the exhaust outlet 13. A compression device 16 of the energy conversion arrangement 10 is provided in the flow path 14 between the air inlet 12 and the fuel conversion device 11 for compressing the inlet air A. An expansion device 17 is provided in the flow path 15 between the fuel conversion device 11 and the exhaust outlet 13 for decompressing the exhausts E. The compression device 16 is connected to the expansion device 17 via a transmission line 18 which may comprise any kind of mechanical and/or electrical energy transmission means and for example, may be embodied as a shaft or alike. The compression device 16 may comprise a turbine 19 (see Fig. 6).

Furthermore, the energy conversion arrangement comprises a contrail reduction device 20. A water supply line 21 is provided to connect the contrail reduction device 22 to the fuel conversion device 11. Thereby, the contrail reduction device 20 may be provided with water W produced in the fuel conversion device 11 by the fuel conversion.

The air inlet 12 provides ambient air A to the compressing device 16 which supplies the fuel conversion device 11 with air A at an elevated pressure. The humid exhausts E, e.g., exhaust air of the fuel cell system of the fuel conversion device 11 is expanded in the turbine to provide power to the compressor. During expansion in the expansion device 17, a water vapour saturation line may be crossed and with a sufficiently high supersaturation, homogeneous nucleation may occur. This results in a large number of tiny exhaust droplets D_{E} which grow through condensation.

This phase change and the associated latent heat release cause a return to thermodynamic equilibrium. The resulting exhaust droplet D_{E} diameters d_{E} are expected to be small, with a majority well below 1 micron. If this large number of small exhaust droplets D_{E} is being emitted from the aircraft 1, there is a high risk of formation of a dense contrail from the plume 6 which might have a strong negative climate impact. To reduce this risk, the contrail reduction device 20 is supplied with liquid water W, which can be a by-product of the fuel conversion.

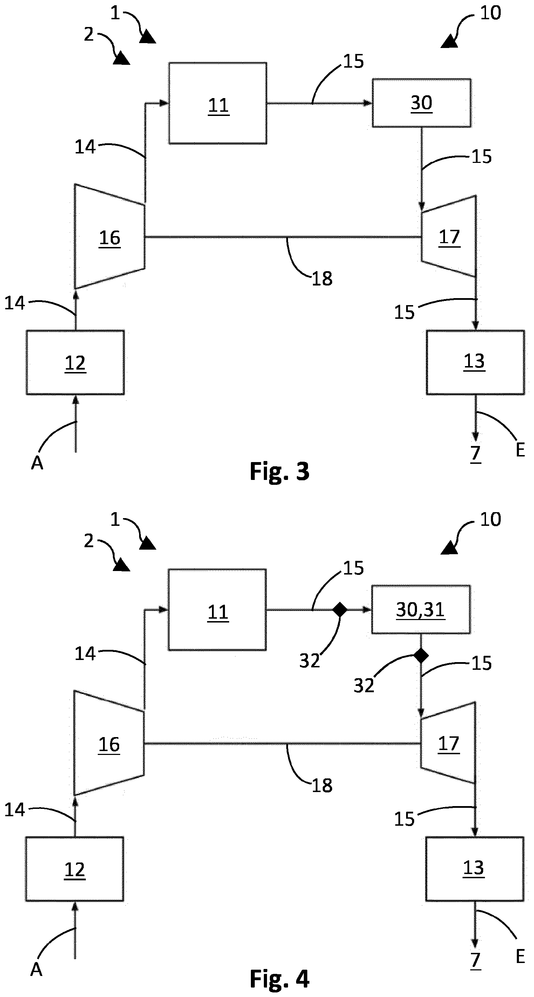

Fig. 3 shows a schematic illustration of another embodiment of an energy conversion arrangement 10 provided with a heating device 30. The heating device 30 is located in the flow path 15 between the fuel conversion device 11 and the exhaust outlet 13. In particular, the heating device 30 is located in the flow path 15 of the exhausts E upstream of the expansion device 17. The exhausts E, e.g., humid exhaust air from a fuel cell system of the fuel conversion device 11, is heated in the heating device 30. The heated exhausts E are being expanded in the expansion device 17, e.g., the turbine 19 thereof, to provide power to the compressing device 16 via the transmission line 18.

The saturation increases during expansion in the expansion device 17. However, the saturation level is overall smaller due to the heating provided by the heating device 30. Alternatively, or additionally, the heating device 30 can be placed in the flow path 15 downstream of the expansion device 17. This altogether prevents droplet formation or at least significantly reduces it. Fewer droplets pose a smaller risk to the formation of a dense contrail. A flow of exhausts E release to the atmosphere 7 with no or few droplets might still lead to droplet formation in the plume 6 outside of the aircraft 1. However, this is still expected to be beneficial as in this process the maximum achieved saturation level is assumed to be smaller than without heating. A smaller maximum saturation level corresponds with fewer, larger droplets C, D'w.

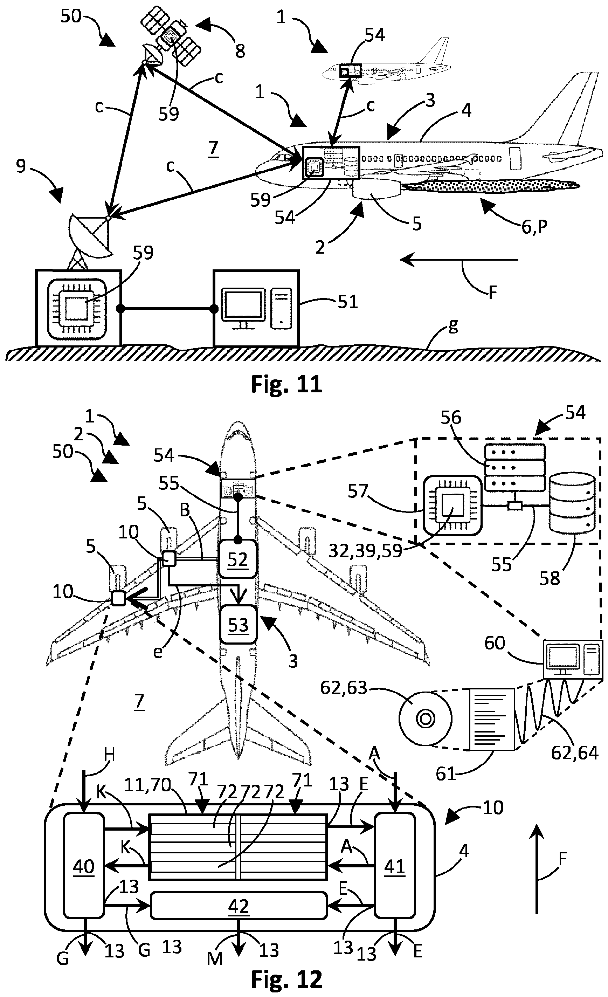

Fig. 4 shows a schematic illustration of the energy conversion arrangement 10 shown in Fig. 3 where the heating device 30 comprises a catalytic converter 31. The catalytic converter 31, for example provided as a catalytic burner, can process leftover fuel, e.g., hydrogen from a fuel cell reaction performed in the fuel conversion device 5. The fuel reacts with oxygen to water while releasing heat. The added heat overcompensates the saturation increase due to the added water W. The catalytic burner also prevents fuel emissions from the energy conversion arrangement 10. Sensors 32 may be provided measure a fuel concentration in the flow path 15 of the exhausts E before and/or after the catalytic burner 31. Additional fuel B can be added to the flow path 15 of the exhausts E upstream of the catalytic burner 31 (see Fig. 11).

Fig. 5 shows a schematic illustration of the energy conversion arrangement shown in Figs. 3 and 4 where the heating device 30 comprises a combustion chamber 33. depicts a fuel cell system with a combustion chamber which burns hydrogen. In the combustion chamber 33, the additional fuel B reacts with oxygen, for example in that hydrogen added as additional fuel B reacts water W, while releasing heat. The added heat overcompensates the saturation increase due to the added water W. The combustion also prevents fuel emissions from the energy conversion arrangement 10.

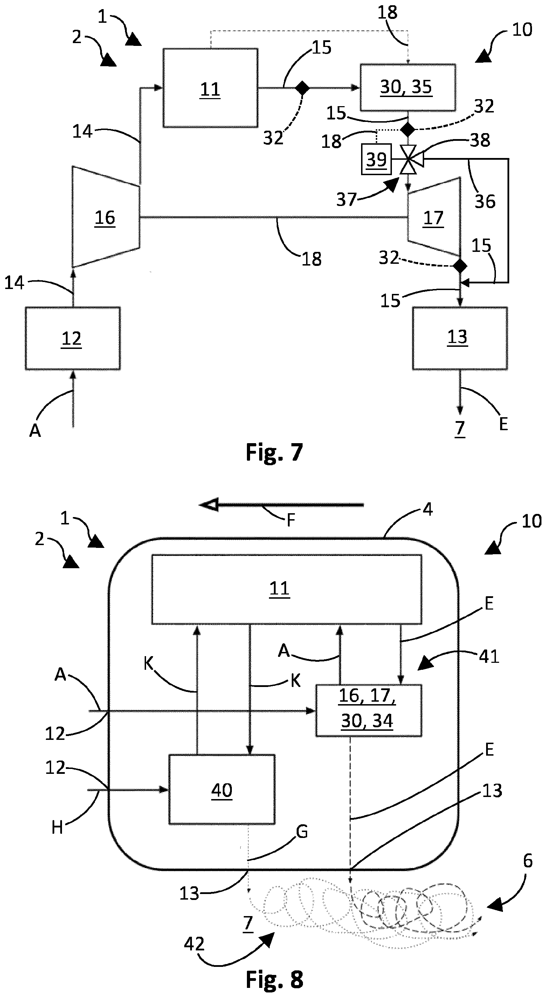

Fig. 6 shows a schematic illustration of the energy conversion arrangement 10 shown in Figs. 3 to 5 where the heating device 30 comprises a heat exchange device 34. The heat exchange device 30 adds heat to the exhausts E of the fuel conversion device 11 and thereby reduces the saturation before the expansion device 17. Alternatively, or additionally, the contrail reduction device 20, heating device 30, catalytic converter 31, sensors 32, and/or combustion chamber 33 may be provided in the flow path 15 of the exhausts E before, within, and/or after the expansion device 17. Heat not transferred from the outflow of the compressing device in the flow path 14 of the air A may be gained from other heat sources of the fuel conversion system 10, in particular from a thermal management system 40 which may comprise multiple heat exchange devices 30 and/or heat exchange elements (see Fig. 8).

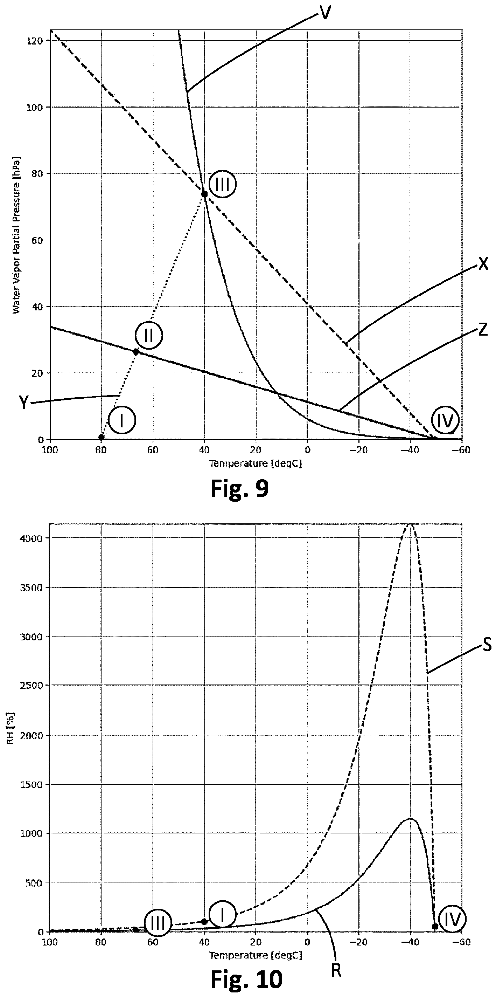

Fig. 7 shows a schematic illustration of the energy conversion arrangement 10 shown in Figs. 9 to 12 where the heating device 30 comprises an electric heating element 35. The heating element 35 may provide electric heating to reduce contrail formation. The added heat reduces the saturation before the expansion device 17. Electric power may be provided to the heating element 35 by means of the transmission line 18 from the fuel conversion device 11 and/or from other sources (not shown).

Furthermore, the energy conversion arrangement 10 may comprise a bypass duct 36 connecting to the flow path 15 of the exhausts E via a flow junction 37. The flow junction 37 may comprise a switch valve 38 which, for example, may be operated in a stepless manner, to let the exhausts E through to the expansion device 17 and/or lead the exhausts E to the exhaust outlet 13 via the bypass duct 36. The switch valve 38 may be operated with the help of a control unit 39 which may be connected to at least one of the sensors 32 via respective transmission line 18 for transmitting energy and/or information.

In operation of the energy conversion arrangement 10, the exhausts E may be branched off from the flow path 15 at the flow junction 37 to bypass the expansion device 17 through the bypass duct 36, thereby forming an alternate or auxiliary flow path 15 for the exhausts E in addition to the main flow path 15 of the exhausts E leading through the expansion device 17. The amount of exhausts E bypassing the expansion device 17 may be controlled by means of the control unit 39 in order to keep any measurement value, such as a temperature value, a pressure value, and/or a humidity value, measured by means of at least one of the sensors 32 before, within, and/or after the expansion device 17 within, above, and/or below a respective desired or required value range and/or limit.

Alternatively, or additionally, the flow junction 37 maybe arranged within the expansion device 17, for example, between certain sections thereof. The flow path 15 leading through the expansion device 17 and the flow path 15 leading through the bypass duct 36 may be joined within and/or after the expansion device 17 and/or the exhaust outlet 13. The bypass duct 36 may be used to bypass any section or component of the energy conversion arrangement 10 as described herein. Therefore, at least one flow junction 38 may be arranged as desired or required for bypassing the expansion device 17, the control reduction device 20, the heating device 30, and/or the heat exchange device 34.

Fig. 8 shows a schematic illustration of a thermal management system 40 of any of the embodiments of an energy conversion arrangement 10 shown herein. The thermal management system 40 may emit further exhausts G, such as air and/or gases which preferably have a higher temperature and/or less relative humidity than the exhausts E. The further exhausts G can be released from the aircraft 1 by being emitted beyond the hull 4 in travel direction F before the exhausts E in the travel direction F. The exhausts E can have passed through an air supply system 41 comprising the compressing device 16, expansion device 17, heating device 30, and/or heat exchange device 34.

Respective exhaust outlets 13 for the exhausts E and the further exhausts G may provide a mixing assembly 42.

The thermal management system 40 can receive further air H from the atmosphere 7 and/or from inside the hull 4. The further air H may be used in the thermal management system 40 to cool down a coolant K which is then supplied to the fuel conversion device 11 in order to maintain a desired temperature level for efficient fuel conversion in the fuel conversion device 11. The coolant K may then be that back to the thermal management system 40. The further air H can be warmed up by means of the coolant K from the fuel conversion device 11.

Fig. 9 shows a schematic diagram showing plume 6 mixing lines in the atmosphere 7 represented by respective water vapor partial pressure as a function of the temperature. The narrow solid curve (line V) is the saturation pressure with regards to liquid water The dashed line X represents the mixing of the humid exhaust E air at point III with the atmospheric air at point IV.

The mixing line X crosses the saturation line V. This means that all points on line X which are on the right hand side of line V are oversaturated. Mixing lines represent the ideal path the plume temperature and water vapor partial pressure would follow when mixing in the atmosphere 7, if no condensation occurs.

In Figure 9, exemplary conditions of such a flow are represented by point III. Point II is the result of the mixing of the humid exhaust air (point III) and the warm, dry flow (point I). The mixing process between these two flows is represented by the dotted line Y. The thick solid line Z represents the mixing line between the mixed exhaust state (point II) and the ambient air (point IV).

Fig. 10 shows a schematic diagram of relative humidity within a plume 6 while mixing in the atmosphere 7. The solid line R on Figure 2 represents the evolution of a relative humidity R of the plume 6 as the exhausts E and further exhausts G (points III and I, respectively) mix with air under ambient atmospheric conditions (point IV). Obviously, in Figure 2 the mixing line R (solid line) does not reach as far into the supersaturated region as the mixing line S (dashed line), which does not feature any contrail reduction solution. The maximum supersaturation is much smaller than without the contrail reduction solution. This means that less droplets are formed and less condensation occurs, resulting in a reduced contrail formation and climate risk. In short, the goal is to reduce the gradient of the mixing line S. The warmer, drier, and higher mass flow of the further exhaust G is, the stronger is the effect.

This principle also works for undersaturated and oversaturated humid exhaust flows. If the humid exhaust flow is saturated with droplets present, its conditions are placed right on the saturation line. In this case, the mixing with a warmer, drier flow causes the (partial) evaporation of droplets. Nevertheless, the gradient of the mixing line S with the ambient air is reduced. In a preferred embodiment, the flow of further exhausts G of the thermal management system 40 is mixed with the humid flow of exhausts E of the air supply system 41. In principle, other waste heat flows work as well, but the thermal management system 40 provides a large mass flow of dry, warm air, in close vicinity of the air supply system 41. Performing the mixing operation still within the aircraft 1 or at least just at respective exhaust outlets 13 and/or a combined exhaust outlet 13 for exhausts E and further exhausts G is preferred as it provides the best control over the mixing process.

Further alternative and/or additional embodiments of the presented solution may involve different air supply architectures, such as blowers instead of compressors, air from cabin instead of from ambient, nozzle instead of and/or in addition to turbine 19, electric motor on a shaft between compression device 16 and turbine 19, humidifiers, dehumidifiers, heat exchangers, etc. Different sources of liquid water W may be used, namely from a tank, from cabin systems, from a water separation device downstream of any point of the thermal management system 40 and/or air supply system 41.

Sensors 32 may be applied to measure ambient conditions and/or to measure condensation and droplet sizes in the energy conversion arrangement 10. Furthermore, sensors 32 may be used to measure contrail occurrence and effectiveness of the contrail reduction device 20. Controls may be used to adapt for different droplet sizes, constant-mode, active-mode, etc. Heating and/or cooling devices 30 may be used to adapt the liquid water temperature in order to reach a smaller droplet size.

Fig. 11 shows a schematic side view of aircrafts 1, a satellite 8 and a control station 9 configured for monitoring and/or controlling properties of a plume 6 of exhausts during flight of at least one of the aircrafts 1, in particular, with regard to at least one contrail formation parameter P of exhausts, the plume 6 and/or the atmosphere 7. The satellite can 8 be orbiting in space and monitor the aircrafts 1 and their plumes 6. The ground station 9 can be positioned on the ground g. The aircrafts 1, satellite 8 and/or ground station 9 may be connected to, provide and/or each comprise the control system 50 and/or a computer system 51 configured to perform monitoring and control functions for and/or in connection with operation of the energy system 2 of the aircraft 1.

As part of the control system 50, the aircrafts 1, satellite 8 and/or ground station 9 may comprise and/or be connected to at least one computing device 51, at least one control device 54 and/or at least one control element 59 (see Fig. 12). Thereby, individually, and/or in conjunction with each other, the aircrafts 1, satellite 8 and/or ground station 9 may keep and/or bring the at least one contrail formation parameter P out of at least one potential impact region of the contrail formation range indicative of a potential contrail impact to be avoided. The aircrafts 1, satellite 8 and/or ground station 9 may communicate with each other via respective communication channels c, for example, configured for digitally exchanging data for operating the control system 50.

Fig. 12 shows a schematic top view of an aircraft 1 comprising a control device 54 for monitoring and controlling properties a composition of exhausts E, further exhausts G and/or an exhausts mix M. The aircraft 1 further comprises a fuel storage system 52 for providing fuel B to at least one energy conversion arrangement 10 of the aircraft 2 for configured to provide electrical power e to the vehicle 1, for example, to propulsion units 5 and/or an energy storage system 53, such a battery, thereof. The control device 54 for controlling the operation of the vehicle 1, energy system 2, propulsion units 5, fuel conversion arrangement 10, and/or fuel conversion device 11 can be provided as a part of the vehicle 1 and/or can be at least partly integrated into the fuel conversion arrangement 10 itself. The control device 54 that can be connected to vehicle 1, energy system 2, propulsion units 5, fuel conversion arrangement 10, and/or fuel conversion device 11 via respective communication lines 55, which can be provided as transmission lines 18 and/or data connections configured to transmit data, such as through the communication channels c, and/or electrical power e in any kind of wired and/or wireless manner.

The control device 54 can comprise a processing unit 56, an interface module 57, a storage module 58 and/or the control element 59 which can be connected to each other via the respective communication lines 55 which may be configured to transfer any kind of information, data, power and/or energy. The vehicle 1 and/or the energy conversion arrangement 2 can be provided with a computing device 60 that may comprise the control device 54 or vice versa. A control program 61, for example, in the form of a computer program, can be stored on a computer-readable data carrier 62 which may take the form of a computer-readable medium 63 and/or data carrier signal 64. The control device 54 may comprise the computing device 60, the computer program 61, the computer-readable data carrier 62, and/or any kind of control element as well as communication lines 55 for exchanging data between the respective above-mentioned components. Control elements 59 may be any kind of data source and/or sink, such as a measuring element, sensor 32, control unit 39, output device and/or actuator of the vehicle 1, the energy conversion arrangement 2 and/or the propulsion units 5 which may constitute a part of the control system 50 for controlling a certain function thereof, for example, by connecting to the control elements 59 through the interface module 54.

In the present example, the energy conversion arrangement 2 comprises a fuel conversion device 11 which may comprise and/or take the form of a fuel cell system 70, such as in any other embodiment of an energy system 2 described herein. The fuel conversion device 11 and respective fuel cell system 70 can be combined as the energy conversion arrangement 10 comprising the thermal management system 40, air supply system 41 and/or mixing assembly 42. The energy conversion arrangement 10 can be located within the hull 4 of the aircraft 1, for example, inside the fuselage 3 and/or nacelles of each of the propulsion units 5.

The aircraft 1 and/or energy system 2 may comprise multiple fuel cell systems 70 which may each comprise multiple fuel cell units 71 which may be used for generating electrical energy e for propulsion of the aircraft 1 and/or for powering auxiliary systems of the aircraft, such as an auxiliary power unit (APUs), and which may be stored in the energy storage system 53. The fuel cell system 70 may comprise and/or may be comprised of at least one fuel cell unit 71 containing multiple fuel cell elements 72 which may be a single fuel cell that can constitute a respective smallest controllable element of the fuel cell unit 71. The fuel cell units 71 may be provided, for example, in the form of fuel cell stacks. Each fuel cell unit 71 may comprise multiple fuel cell elements 72.

The fuel conversion device 11 may take up air A from the air supply system 41 and fuel B from the fuel storage system 52, and generates exhausts E, for example, relatively humid air, when converting the fuel B to electrical energy e in thermal energy under production of the exhaust E. The exhausts E from the fuel conversion device 11 and/or fuel cell system 70 can pass through the air supply system 41 which may comprise the compressing device 16, expansion device 17, heating device 30, and/or heat exchange device 34. Respective exhaust outlets 13 for the exhausts E may lead the exhausts E to the air supply system 41, the mixing assembly 42 and/or beyond hull 4.

In the mixing assembly 42, the exhausts E may be mixed with further exhausts G from the thermal management system 40 in a controlled manner to obtain an exhausts mix M of the exhaust the and the further exhausts G. The exhausts mix M may emitted through a respective exhaust outlet 13 of the mixing assembly 42 beyond the hull 4 of the aircraft. The thermal management system 40 can receive further air H from the atmosphere 7 and/or from inside the hull 4.

The further air H may be used in the thermal management system 40 to cool down a coolant K which is then supplied to the fuel conversion device 11 and/or the fuel cell system certainly70 in order to maintain a desired temperature level for efficient fuel conversion in the fuel conversion device 11 and/or fuel cell system 70. The coolant K may then be transported back to the thermal management system 40. The further air H can be warmed up by means of the coolant K from the fuel conversion device 11 to provide the further exhausts G.

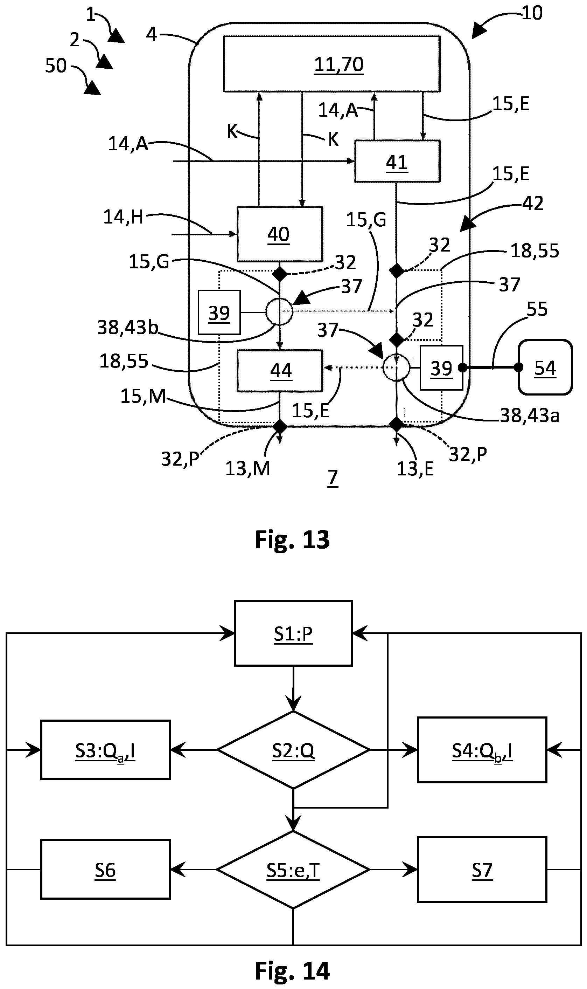

Fig. 13 shows a schematic illustration of a further embodiment of an energy conversion arrangement provided 10 with at least one control valve 43 for admixing the exhausts E to the further exhausts G and/or for admixing the further exhausts G to the exhausts E. For example, the mixing assembly 42 may comprise at least one first control valve 43a configured for admixing the exhausts E of the fuel conversion device 11 to the further exhausts G of the of the energy conversion arrangement 10 and/or at least one second control valve 43b configured for admixing the further exhausts G of the of the energy conversion arrangement 10 to the exhausts E of the fuel conversion device 11. The at least one first control valve 43a can be arranged in a flow path 15 of the exhausts E of the fuel conversion device 11 downstream of an air supply system 41 of the energy conversion arrangement 10 and/or the at least one second control valve 43b is arranged in a flow path 15 of the further exhausts G downstream of as thermal management system 40 of the energy conversion arrangement 10.

The control valves 43 may be configured as switch valves 38 and can be operated with the help of respective control units 39 which may be connected to at least one of the sensors 32 via respective transmission line 18 for transmitting energy and/or information and can further be connected to the control device 54. The control valves 43 may each provide and/or be arranged at a flow junction 37 configured to branch-off and/or divert the exhausts E and/or the further exhausts G from their flow path 15 to an alternate auxiliary flow path 15, bypass duct, or alike. The amount of exhausts E and/or further exhausts G branched-off and/or diverted may be controlled by means of the control unit 39 and/or the control device 54 in order to keep any measurement value, such as a temperature value, a pressure value, and/or a humidity value, measured by means of at least one of the sensors 32 before, within, and/or after the expansion device 17 within, above, and/or below a respective desired or required value range and/or limit.

In the present example, the mixing assembly 42 comprises a mixing device 44 which can be arranged within the hull 4. The first control valve 43a can be arranged in the flow path 15 of the exhausts E after the air supply system 41. In order to be able to branch-off o and/or divert the exhausts E to the mixing device 44 before and/or when reaching the exhaust outlet 13. Alternatively, or additionally, the second control valve 43b may be provided in the flow path 15 of the further exhausts G after the thermal management system 40 in order to branch-off and/or divert the exhausts E before and/or when reaching the mixing device 44 and/or exhaust outlet 13 to be admixed to the exhausts E at a respective flow junction 37. Respective sensors 32 may be provided in the flow path 15 of the exhaust E before and/or after the respective flow junction 37 and/or control valve 43 in each case, as well as after the mixing assembly 44 and/or at any exhaust outlet 13.

Fig. 14 shows a schematic representation of possible steps of a method for the energy conversion arrangement 10. For example, in a first step, the at least one contrail formation parameter P may be monitored. If it is being assessed in the second step S2 that it is advisable and/or necessary to keep and/or bring the at least one contrail formation parameter P out of at least one potential impact region of the contrail formation range indicative of a potential contrail impact to be avoided, then, in a third step S3 the exhausts E can be admixed to the further exhausts G and/or in a fourth step S4, the further exhausts G may be admixed to the exhausts. The mixing can be achieved by operating the first control valve 43a and/or the second control valve 43b to provide respective mixing ratios Q, such as a first mixing ratio Qₐ and/or a second mixing ratio Q_{b}, representing an amount of exhausts E admixed to the further exhausts G and/or an amount of further exhausts G admixed to the exhausts E, respectively.

The mixing ratios Q can be defined as a ratio having the amount of further exhausts G as a nominator and the amount of exhausts E as a denominator and can be kept zero, or at least essentially near zero, if the exhausts E of the fuel cell system 70 are out of the at least one potential impact region of the contrail formation range. Respective amounts of exhausts E admixed to the further exhausts G and/or an amount of further exhausts G admixed to the exhausts E can be held below a mixing threshold I which may indicate a limitation of the respective mixing ratios Q. In and/or after step S2, step S3, and/or step S4, it may be returned to step S1 in order to create a control loop for continuously monitoring the contrail formation parameter P in order to assess whether any of the mixing processes are necessary to keep and/or bring the at least one contrail formation parameter P out of at least one potential impact region of the contrail formation range indicative of a potential contrail impact to be avoided.

Alternatively, and/or additionally, in a fifth step S5 be assessed whether an output of energy e of the fuel cell system 70 should be increased, for example, in order to elevate a temperature value T of the exhausts E and/or the further exhausts G. In a sixth step S6, the fuel cell system 70 can be controlled such that its output of energy e should be increased to keep and/or bring the at least one contrail formation parameter P out of at least one potential impact region of the contrail formation range indicative of a potential contrail impact to be avoided. Alternatively, and/or additionally, in a seventh step S7, the fuel cell system 70 can be controlled such that the at least two fuel cell elements 72 are being operated each at a different current density to keep and/or bring the at least one contrail formation parameter P out of at least one potential impact region of the contrail formation range indicative of a potential contrail impact to be avoided.

Any of the steps S3, S4, S6 and S7 for mixing the exhausts E, G, and/or increasing an energy output of the fuel cell system 70, respectively, can be combined with each other as desired as or required for keeping asset or bringing the at least one contrail formation parameter P out of at least one potential impact region of the contrail formation range indicative of a potential contrail impact to be avoided. For example, can be decided in step S5 that, if a certain mixing threshold I is reached in steps S3 and/or S4, without reaching a desired effect on the at least one control formation parameter P, then alternatively, and/or additionally, steps S6 and/or S7 are or is, respectively, applied in order to provide respective additional energy e output and/or arise of the temperature value T to enhance the result of any of the respective mixing processes, for example, in order to reduce a relative humidity of the exhausts E, the further exhausts G, and/or the exhausts mix M.

The described method enables a control mechanism to either allow for a mixing of the TMS (further exhausts G exiting the TMS) and ASP (exhausts E exiting the ASP) outflows, i.e., and/or two separate outflows. This way, the mixing can be selectively conducted during contrail forming conditions. Hence, any thermodynamic losses caused by the mixing process occur only when necessary. The accurate prediction for contrail forming conditions can be carried out in each of the steps of the method, in particular, in step S1 when monitoring the at least one contrail formation parameter P. This can be achieved by sensors 32 and/or control elements 59 on the aircraft 1 and/or by information provided from external sources, such as other aircraft 1, satellites 8 and/or ground stations 9.

Alternatively, or additionally, steps S5, S6 and/or S7 allow for adding a controlled amount of heat to the exhausts, for example in the form of TMS outflow to the ASP outflow. This would allow to control the droplet formation in the ASP outflow. Adding heat reduces the relative humidity and hence delays the formation of droplets. Not adding heat promotes droplet formation. Depending on the outflow aerodynamics, an enhanced or delayed droplet formation reduces or increases the final droplet number and droplet size. This adds another degree of freedom and provides control of contrail properties.

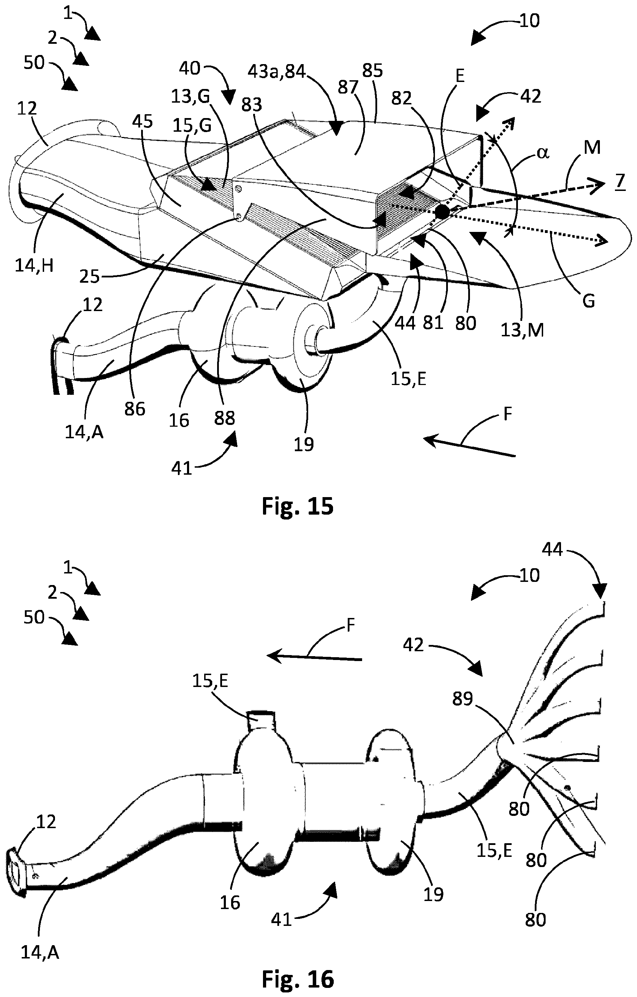

Fig. 15 shows a schematic perspective view of an embodiment of a mixing assembly 42 of the energy conversion arrangement 10. Here, parts of the thermal management system 40, the air supply system 41 and the mixing assembly 42 of the energy conversion arrangement 10 are illustrated. The thermal management system 40 has an air inlet 12 essentially facing into the travel direction F in order to take in the further air H. The respective flow path 14 for the further air H can be provided by an air duct 25 in the form of a ram air channel leading the further air H to a heat exchanger unit 45 comprising at least one heat exchanger element of the thermal management system 40. Further air H leaves the heat exchanger unit 45 as further exhausts G flowing along the respective flow path 15.

The air supply system 41 provides the air inlet 12 also facing essentially into the travel direction F for taking in the air A to be led to the fuel conversion device 11. In the present example, the air A is compressed by the compressing device 16 driven by the turbine 19 which can be powered by the exhausts E provided as an outflow from the fuel conversion device 11. After exiting the turbine, the exhausts E flow along their respective flow path 15.

The mixing assembly 42 comprises the mixing device 44. In the present example, the mixing device 44 is provided in the form of a slot nozzle 80 providing a longitudinal outlet opening 81 for the exhausts E. The outlet opening 81 extends essentially perpendicularly to the flow path of the further exhausts G in that it extends along an entire outlet channel 82 leading to a further outlet opening 83 for the further exhausts G facing essentially in a direction opposite to the travel direction F. A size of the outlet channel 82 and/or further outlet opening 83 can be at least partially controlled by means of the first control valve 43a embodied as a throttle device 84 in the present example.

The throttle device 84 can be provided in the form of and/or comprise a flap 85 which can be hinged at least one hinge point 86. The flap 85 can be rotated around the hinge point 85 to be moved between a closed position and an open position. In the open position shown in Fig. 15, a top wall portion 87 is moved away from an outlet 13 of the further exhausts G from the heat exchange unit 45. Lateral side wall portions 88 of the flap 85 laterally delimit and thereby define the outlet channel 82 in the open position of the flap 85. In the closed position, the flap 84 may at least sectionwise cover up the outlet opening 81 such that in may be used to close the outlet channel 81 for the exhausts E.

Further exhausts G exit the outlet 13 of the further exhausts G from the heat exchange unit 45 and are led towards the mixing device 44, in particular, the outlet opening 81 of the slot nozzle 80. As the further exhausts G pass the outlet opening 81, they are admixed to the exhausts E exiting the outlet opening 81. The respective flows of the exhausts E and the further exhausts G are directed such that they meet each other under a mixing angle α. The exhausts E and the further exhausts G are thus mixed with each other to create the exhausts mix M exiting the mixing assembly via the exhaust outlet 13 for the exhausts mix M constituting a combined exhaust outlet.

Fig. 16 shows a schematic perspective view of another embodiment of a mixing assembly 42 the mixing device 44. Here, the mixing device 44 comprises at least one manifold 89 which is adapted to lead the exhausts E to a number of slot nozzles 80. Thereby, the outflow of the exhausts E from the air supply system 41 is divided up in order to exit the respective outlet openings 81 in a similar manner as described above in relation to the embodiment of the mixing assembly 42 illustrated in Fig. 15. The manifold 89 is arranged in the flow path 15 of the exhausts E exiting the turbine 19 and leads the exhausts to the outlet openings 81 provided by the slot nozzles 80. For example, the manifold 89 is arranged in the flow path 15 of the exhausts E between the turbine 19 and the exhaust outlet 13, in particular the combined exhaust outlet.

In the present example, the air duct 25 in the form of a ram air channel is used, in which cold ambient air H is utilized as a heat sink for the heat taken from the fuel cell system 70. The heat exchanger unit 45, which is part of the thermal management system 10, is used to transfer the heat from the coolant K towards the cold air flow. After the heat exchanger unit 45, the further exhausts G in the form of a warm and still dry air flow pass the mixing device 44, in particular the slot nozzle(s) 80 thereof. Here, the exhausts E from the energy conversion device 11 in the form of humid exhaust air from the air supply system 41 are introduced into the ram air channel. The mixing device 44 ensures an effective and even mixing of the two flows. After the mixing device 44, an exhaust mix M consisting of the two flows is emitted to the ambient surroundings, i.e., the atmosphere 7, through the combined exhaust outlet 13.

### List of Reference Signs

- 1: aircraft
- 2: energy system
- 3: fuselage
- 4: hull
- 5: propulsion unit
- 6: plume
- 7: atmosphere
- 8: satellite
- 9: ground station / control station

- 10: energy conversion arrangement
- 11: fuel conversion device
- 12: air inlet
- 13: exhaust outlet
- 14: flow path (air)
- 15: flow path (exhausts)
- 16: compressing device
- 17: expansion device
- 18: transmission line
- 19: turbine

- 20: contrail reduction device
- 21: water supply line / piping
- 25: air duct

- 30: heating device
- 31: catalytic converter
- 32: sensor
- 33: combustion chamber
- 34: heat exchange device
- 35: electric heating element
- 36: bypass duct
- 37: flow junction
- 38: switch valve / discharge valve
- 39: control unit

- 40: thermal management system
- 41: air supply system
- 42: mixing assembly
- 43: control valve / switch valve
- 43a: first control valve
- 43b: second control valve
- 44: mixing device
- 45: heat exchanger unit / element

- 50: control system
- 51: computing system
- 52: fuel storage system
- 53: energy storage system / power storage / battery
- 54: control device
- 55: transmission line / communication line / data connection
- 56: processing unit
- 57: interface module
- 58: storage module
- 59: control element
- 60: computing device
- 61: control program / computer program
- 62: computer-readable data carrier
- 63: computer-readable medium
- 64: data carrier signal

- 70: fuel cell system
- 71: fuel cell unit
- 72: fuel cell element

- 80: slot nozzle
- 81: outlet opening
- 82: outlet channel
- 83: further outlet opening
- 84: throttle device
- 85: flap
- 86: hinge point
- 87: top wall portion
- 88: side wall portion
- 89: manifold

- I: warm, dry flow
- II: two exhausts mixing
- III: humid exhaust air
- IV: ambient air

- d: diameter
- c: communication channels
- e: energy
- g: ground

- A: air
- B: fuel
- C: Coagulated droplet
- D: Droplet
- E: exhausts
- F: travel direction
- G: further exhausts
- H: further air
- I: mixing threshold
- M: exhausts mix
- P: contrail formation parameter
- Q: mixing ratio
- K: coolant
- R: mixing with contrail reduction / mixing ratio
- S: mixing without reduction
- V: saturation pressure
- W: water
- X: saturation line
- Y: mixing line
- Z: mixing line

- α: mixing angle

- S1: monitor parameter
- S2: assess contrail formation parameter / determine mixing ratio
- S3: adjust first mixing ratio
- S4: adjust second mixing ratio
- S5: assess contrail formation parameter / determine energy output
- S6: increase output
- S7: create imbalance

## Claims

1. Energy conversion arrangement (10) for an aircraft (1), comprising a fuel conversion device (11), in particular a fuel cell system (70), for converting
at least one fuel to electrical and/or mechanical energy, and at least one an exhaust outlet (13) for letting out exhausts (E) produced in the
fuel conversion device (11) by the fuel conversion; and at least one mixing assembly (42) configured to admix further exhausts (G) of
the fuel conversion device (11) to the exhausts (E) from the at least one exhaust outlet (13).

2. Energy conversion arrangement (10) according to claim 1, wherein the at least one mixing assembly (42) is arranged at a flow path (15) of the further exhausts (G)

3. Energy conversion arrangement (10) according to claim 1 or 2, wherein the at least one mixing assembly (42) is configured to let the further exhausts (G) pass along the at least one exhaust outlet (13).

4. Energy conversion arrangement (10) according to at least one of claims 1 to 3, wherein the at least one exhaust outlet (13) is configured as at least a part of a mixing device (44) of the at least one mixing assembly (42).

5. Energy conversion arrangement (10) according to claim 4, wherein the mixing device (44) is configured to blow a stream of the further exhausts (G) into a stream of the exhausts (E).

6. Energy conversion arrangement (10) according to claim 4 or 5, wherein the mixing device (44) is configured as at least one slot nozzle (80).

7. Energy conversion arrangement (10) according to at least one of claims 4 to 6, wherein a manifold (89) of the mixing device (44) leads to at least two slot nozzles (80).

8. Energy conversion arrangement (10) according to at least one of claims 4 to 7, wherein the mixing device (44) comprise guiding elements in the form of teeth, prongs and/or a comb.

9. Energy conversion arrangement (10) according to at least one of claims 4 to 8, wherein the mixing device (44) is configured to provide a mixing angle under which a flow of the exhausts (E) enters the flow of the further exhausts.

10. Energy conversion arrangement (10) according to claim 9, wherein the mixing angle (α) amounts to less than 90°.

11. Energy conversion arrangement (10) according to at least one of claims 1 to 10, wherein the mixing assembly (42) comprises a throttle device (84) configured to throttle a stream of the further exhausts (G).

12. Energy conversion arrangement (10) according to claim 11, wherein the throttle device (84) comprises a flap (85) configured to open and close a further exhaust outlet (83) for the further exhausts (G).

13. Energy conversion arrangement (10) according to claim 11 or12, wherein the throttle device (84) is configured to direct a stream of the further exhausts (G) onto to a stream of the exhausts (E) from the at least one exhaust outlet (13) at least in an intermediate position between an open position and a closed position of the throttle device.

14. Energy system (2), in particular for powering a propulsion unit (5) for propelling an aircraft (1), comprising an energy conversion arrangement according to at least one of claims 1 to 13.

15. Aircraft (1) comprising an energy conversion arrangement (10) according to at least one of claims 1 to 13 and/or an energy system (2) according to claim 14.
